(19) Europäisches Patentamt
European Patent Office
Office européen des brevets

(11) **EP 2 913 797 A1**

(12) **EUROPEAN PATENT APPLICATION**

(43) Date of publication:
**02.09.2015 Bulletin 2015/36**

(51) Int Cl.:
***G06T 7/00*** (2006.01)

(21) Application number: **15155685.9**

(22) Date of filing: **19.02.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.02.2014 JP 2014037502
14.01.2015 JP 2015004787**

(71) Applicant: **Ricoh Company, Ltd.
Tokyo 143-8555 (JP)**

(72) Inventors:
• **Watanabe, Eita**
  **Tokyo, 143-8555 (JP)**
• **Sekiguchi, Hiroyoshi**
  **Tokyo, 143-8555 (JP)**
• **Watanabe, Yoshikazu**
  **Tokyo, 143-8555 (JP)**
• **Kuromizu, Reiko**
  **Tokyo, 143-8555 (JP)**
• **Takahashi, Yuji**
  **Tokyo, 143-8555 (JP)**
• **Fujimoto, Hideomi**
  **Kanagawa, 222-8530 (JP)**

(74) Representative: **Schwabe - Sandmair - Marx
Patentanwälte
Stuntzstraße 16
81677 München (DE)**

(54) **ACCURATE PARALLAX CALCULATION IN IMAGE REGIONS WITH LOW TEXTURE**

(57)    An information processing method for measuring a distance to an object imaged on a captured image, includes acquiring plural captured images, on each of which the object is imaged, each of the captured images including pixel data having a first polarization component of light emitted from the object and pixel data having a second polarization component, the first polarization component and the second polarization component being orthogonal to each other; generating plural polarization images from the plural captured images, respectively, each of the polarization images being any one of a first polarization image including pixel data having the first polarization component, a second polarization image including pixel data having the second polarization component and a polarization ratio image including pixel data having a ratio of the first polarization component to the second polarization component; and determining a parallax between the polarization images.

FIG.1

**Description**

**BACKGROUND OF THE INVENTION**

1. Field of the Invention

The disclosures herein generally relate to an information processing method, an information processing system, a program and an information processing apparatus.

2. Description of the Related Art

Conventionally, ranging techniques that measure distances to objects included in captured images (stereo images) captured using plural imaging units such as stereo cameras by performing parallax calculations have been known.
In the case of in-vehicle cameras, the ranging techniques are known to be techniques that detect vehicles, persons, obstacles or the like in front by parallax images.
Moreover, in the case of industrial cameras, the ranging techniques are known to be techniques that perform object recognition for parts or the like and calculate parallaxes in order to perform so-called picking.
Japanese Patent No. 5278819 discloses a stereo camera apparatus including first and second image capturing units and a control unit. The first image capturing unit includes first and second lens units, a first light synthesis unit, a first area-divided filter, and a first image capturing element. The first light synthesis unit and the first area-divided filter guide S-polarized and P-polarized light components to the first image capturing element to detect S-polarized and P-polarized light component images. The second image capturing unit includes third and fourth lens units, a second light synthesis unit, a second area-divided filter, and a second image capturing element. The second light synthesis unit and the second area-divided filter guide S-polarized and P-polarized light components to the second image capturing element to detect S-polarized and P-polarized light component images. The control unit includes first and second controllers to compute three-dimensional data of objects using the S-polarized and P-polarized light component images, respectively.
Japanese Published Patent Application No. 2010-256138 discloses a capturing apparatus including a first imaging unit for capturing an image to measure a distance to an object; a distance calculation unit for calculating the distance to the object using data based on the image captured by the first imaging unit; a second imaging unit for capturing an image to measure a polarization component; a polarization analysis unit for analyzing a polarization state using data based on the image captured by the second imaging unit; and a distance image generation unit for generating a distance image of the object based on distance information related to the distance calculated by the distance calculation unit and polarization analysis information related to the polarization state analyzed by the polarization analysis unit.
Japanese Published Patent Application No. 2011-85539 discloses a ranging camera apparatus including an imaging device that images a subject and outputs polarization image data having a phase difference; an operating process unit; a memory; and an image processing unit. The operating process unit includes first and second polarization ratio information processing units and a parallax calculating unit. The first and the second polarization ratio information processing units receive the polarization image data and calculate polarization ratio information image data and luminance information image data. The parallax calculating unit receives the polarization ratio information image data and generates parallax information image data. The polarization ratio information image data, the luminance information image data, and the parallax information image data are stored in the memory. The image processing unit recognizes the subject based on the data stored in the memory, and calculates a three-dimensional position of the subject based on the parallax information image data.
Japanese Published Patent Application No. 2011-215545 discloses a parallax image acquisition apparatus including an object lens optical system for condensing light flux coming from a photographic subject; polarizers provided on an optical path of the light flux and for transmitting two kinds of linear polarizations mutually-perpendicular according to a surface region in a planar view; a light amount changing unit provided on the optical path of the light flux and for changing transmission rate; a light flux separation unit provided in a latter part of a condenser lens optical system on the optical path of the light flux and for separating the light flux into two types of light flux according to a polarization direction of the light flux; and an imaging unit for capturing the respective two types of light flux separated by the light flux separation unit and generating a parallax image.
Japanese Published Patent Application No. 2012-181142 discloses a stereo image processing method including a generation step, upon first and second images being input, of generating window cost which is an evaluation value, for each of plural first windows including first pixel data of the first image at positions, different from each other, according to dissimilarity between the first window and a second window of the second image corresponding to designated parallax data; a calculation step of calculating a modified cost for tallying cumulative addition cost in which window costs of three or more pixel data adjacent to the first pixel data are cumulatively added to the window cost of the first window; an obtaining step of obtaining respective corresponding points of the pixel data of the first image in the second image based on the calculated modified cost; and an outputting step of outputting parallax data.

Japanese Published Patent Application No. 2013-38502 discloses acquiring plural viewpoint images and generating images for three-dimensional image display without causing a reduction in polarization performance. Provided are: a first polarization means which has a first polarization region and a second polarization region that each allow different polarized light to be transmitted therethrough; a second polarization means which is made up of a third polarization region that allows only the transmitted light of either one of the first polarization region and the second polarization region to be transmitted therethrough, and a total transmission region that allows the transmitted light of the first polarization region and the second polarization region to be transmitted therethrough; an imaging element into which the transmitted light of the second polarization means is input; and an image processing unit which executes signal processing for an output signal of the imaging element. The image processing unit generates parallax information in which subject distance is reflected by applying a first viewpoint image that is based on the transmitted light of the total transmission region of the second polarization means, and a second viewpoint image that is based on the transmitted light of the third polarization region of the second polarization means, and generates a left-eye-purpose image and a right-eye-purpose image for three-dimensional image display by means of image conversion processing of the first viewpoint image for which the parallax information is applied.

Japanese Published Patent Application No. 2013-38503 discloses an imaging element that captures multiple viewing point images corresponding to images observed from different viewing points. An image processing unit separates an output signal of the imaging element, acquires the viewing point images corresponding to the images observed from the different viewing points, and generates a left eye image and a right eye image for three-dimensional image display, on the basis of the acquired viewing point images. The image processing unit generates parallax information on the basis of the viewing point images obtained from the imaging element and generates a left eye image and a right eye image for three-dimensional image display by 2D3D conversion processing using the generated parallax information. By this configuration, a plurality of the viewing point images are acquired on the basis of one captured image and images for three-dimensional image display are generated.

Japanese Published Patent Application No. 2013-126114 discloses a stereo image processing unit including a dissimilarity calculation unit, upon a stereo image of a predetermined frame being input, for calculating dissimilarity of the stereo image; a weight value calculation unit for calculating a weight value for the predetermined frame based on parallax information of a frame just before the predetermined frame; a first filter for weighting the weight value provided from the weight value calculation unit for the dissimilarity of the stereo image provided from the dissimilarity calculation unit; an optimization unit for calculating parallax information of the predetermined frame based on the dissimilarity that is weighted by the weight value provided from the first filter; and a first memory for storing the parallax information of the predetermined frame provided from the optimization unit and for outputting the stored parallax information to the weight value calculation unit.

Japanese Published Patent Application No. 2013-167624 discloses a dynamic expansion operation of an index value image performed by specifying an index value range before correction (Gmin to Gmax) for one index value image, calculating magnification K which is to be expanded to an ideal index value range (0 to 1023), and correcting an index value before correction G by the magnification K. An effective magnification Kthre to expand a maximum effective index value range (215 to 747) that can be taken as the index value before correction G calculated from transmittance of a filter to the ideal index value range (0 to 1023) is stored, and in a case where the calculated magnification K is smaller than the effective magnification Kthre, the expansion operation is performed by use of the effective magnification Kthre.

However, in the conventional methods, accuracies in parallax calculations for image regions may be poor for image regions with low textures where road surfaces on which vehicles pass, metal material objects or the like are captured.

## SUMMARY OF THE INVENTION

It is a general object of at least one embodiment of the present invention to provide an information processing method, an information processing system, a program and an information processing apparatus that substantially obviate one or more problems caused by the limitations and disadvantages of the related art.

In one embodiment, an information processing method for measuring a distance to an object imaged on a captured image, includes acquiring a plurality of captured images, on each of which the object is imaged, each of the captured images including pixel data having a first polarization component of light emitted from the object and pixel data having a second polarization component of the light emitted from the object, the first polarization component and the second polarization component being orthogonal to each other; generating a plurality of polarization images from the plurality of captured images, respectively, each of the polarization images being any one of a first polarization image including pixel data having the first polarization component, a second polarization image including pixel data having the second polarization component, and a polarization ratio image including pixel data having a ratio of the first polarization component to the second polarization component; and determining a parallax between the polarization images.

In another embodiment, an information processing system for measuring a distance to an object imaged on a captured image, includes a plurality of imaging devices configured to capture a plurality of captured images, on each of which the object is imaged, each of the captured images including pixel data having a first polarization component of light emitted from the object and pixel data having a second polarization component of the light emitted from the object, the first polarization component and the second polarization component being orthogonal to each other; a generation unit configured to generate a plurality of polarization images from the plurality of captured images captured by the imaging devices, respectively, each of the polarization images being any one of a first polarization image including pixel data having the first polarization component, a second polarization image including pixel data having the second polarization component, and a polarization ratio image including pixel data having a ratio of the first polarization component to the second polarization component; and a parallax determination unit configured to determine a parallax between the polarization images generated by the generation unit.

In yet another embodiment, a non-transitory computer-readable storage medium stores a program for causing an information processing system including a plurality of imaging units to execute a process of measuring a distance to an object imaged on a captured image. The process includes acquiring a plurality of captured images by the plurality of imaging units, on each of the captured images the object being imaged, each of the captured images including pixel data having a first polarization component of light emitted from the object and pixel data having a second polarization component of the light emitted from the object, the first polarization component and the second polarization component being orthogonal to each other; generating a plurality of polarization images from the plurality of captured images, respectively, each of the polarization images being any one of a first polarization image including pixel data having the first polarization component, a second polarization image including pixel data having the second polarization component, and a polarization ratio image including pixel data having a ratio of the first polarization component to the second polarization component; and determining a parallax between the polarization images.

In yet another embodiment, an information processing apparatus for measuring a distance to an object imaged on a captured image, includes a plurality of imaging units configured to capture a plurality of captured images, on each of which the object is imaged, each of the captured images including pixel data having a first polarization component of light emitted from the object and pixel data having a second polarization component of the light emitted from the object, the first polarization component and the second polarization component being orthogonal to each other; a generation unit configured to generate a plurality of polarization images from the plurality of captured images captured by the imaging units, respectively, each of the polarization images being any one of a first polarization image including pixel data having the first polarization component, a second polarization image including pixel data having the second polarization component and a polarization ratio image including pixel data having a ratio of the first polarization component to the second polarization component; and a parallax determination unit configured to determine a parallax between the polarization images generated by the generation unit.

According to the present invention, an information processing method, an information processing system, a program and an information processing apparatus are disclosed that can perform accurate parallax calculation for image regions in which textures are low.

## BRIEF DESCRIPTION OF THE DRAWINGS

Other objects and further features of embodiments will be apparent from the following detailed description when read in conjunction with the accompanying drawings, in which:

Fig. 1 is a block diagram illustrating an example of a hardware configuration of an imaging system according to a first embodiment;
Figs. 2A to 2D are diagrams for explaining an example of a captured image captured by a polarization camera according to the first embodiment;
Figs. 3A and 3B are diagrams for explaining an example of a configuration of the polarization camera according to the first embodiment;
Fig. 4 is a functional block diagram for explaining an example of a functional configuration of the imaging system according to the first embodiment;
Fig. 5 is a diagram for explaining an example of calculation of coincidence (Px3, Py5) by the imaging system according to the first embodiment;
Fig. 6 is a diagram for explaining an example of a result of the calculation of the coincidence (Px3, Py5) by the imaging system according to the first embodiment;
Figs. 7A and 7B are diagrams for explaining an example of propagation according to the first embodiment;
Fig. 8 is a diagram for explaining an example of a result of dense parallax calculation for a brightness image;
Fig. 9 is a diagram for explaining an example of a result of dense parallax calculation for a polarization image according to the first embodiment;

Fig. 10 is a diagram for explaining an example of a result of calculation for decimal fraction parallax according to the first embodiment;

Fig. 11 is a functional block diagram for explaining an example of a functional configuration of an imaging system according to a second embodiment;

Fig. 12 is a table for explaining an example of a result of process by the imaging system according to the second embodiment;

Fig. 13 is a diagram for explaining an example of a result of process by the imaging system according to the second embodiment;

Fig. 14 is a functional block diagram for explaining an example of a functional configuration of an imaging system according to a third embodiment;

Fig. 15 is a functional block diagram for explaining an example of a functional configuration of an imaging system according to a fourth embodiment;

Fig. 16 is a functional block diagram for explaining an example of a functional configuration of an imaging system according to a fifth embodiment;

Fig. 17 is a functional block diagram for explaining an example of a functional configuration of an imaging system according to a sixth embodiment;

Fig. 18 is a functional block diagram for explaining an example of a functional configuration of an imaging system according to a seventh embodiment;

Fig. 19 is a functional block diagram for explaining an example of a functional configuration of an imaging system according to an eighth embodiment;

Figs. 20A and 20B are diagrams for explaining an example of a histogram enlargement process by the imaging system according to the eighth embodiment;

Fig. 21 is a functional block diagram for explaining an example of a functional configuration of an imaging system according to a ninth embodiment;

Fig. 22 is a functional block diagram for explaining an example of a functional configuration of an imaging system according to a tenth embodiment;

Fig. 23 is a functional block diagram for explaining an example of a functional configuration of an imaging system according to an eleventh embodiment;

Fig. 24 is a functional block diagram for explaining an example of a functional configuration of an imaging system according to a twelfth embodiment;

Fig. 25 is a functional block diagram for explaining an example of a functional configuration of an imaging system according to a thirteenth embodiment;

Fig. 26 is a functional block diagram for explaining an example of a functional configuration of an imaging system according to a fourteenth embodiment; and

Fig. 27 is a functional block diagram for explaining an example of a functional configuration of an imaging system according to a fifteenth embodiment.

## DESCRIPTION OF THE PREFERRED EMBODIMENTS

In the following, embodiments of the present invention will be described with reference to the accompanying drawings. Meanwhile, in the specification and the drawings, the same reference symbol is assigned to elements having essentially the same functional configuration, and a duplicate explanation will be omitted.

<First embodiment>

<System configuration>

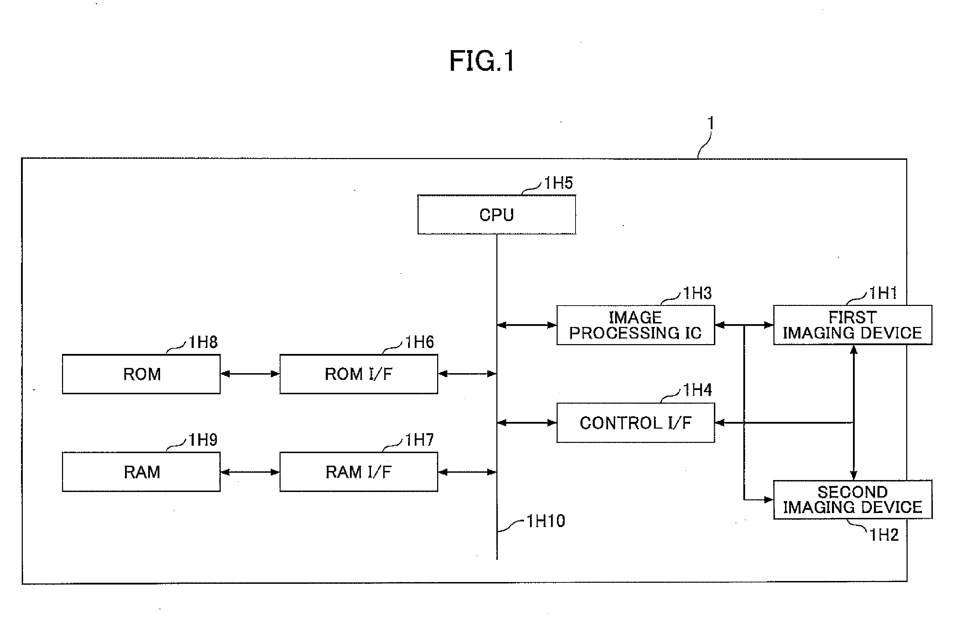

Fig. 1 is a block diagram for explaining an example of a hardware configuration of an imaging system 1 according to the present embodiment.

An information processing system is, for example, the imaging system 1. In the following, the imaging system 1 will be explained as an example.

The imaging system 1 is, for example, a stereo camera system. In the following, the case of the stereo camera system will be explained, as an example.

The imaging system 1 includes a first imaging device 1H1, a second imaging device 1H2, an image processing IC (Integrated Circuit) 1H3 and a control I/F (Interface) 1H4. Furthermore, the imaging system 1 includes a CPU (central processing unit) 1H5, a ROM (Read-Only Memory) I/F 1H6, and a RAM (Random Access Memory) I/F 1H7. Furthermore, the imaging system 1 includes a ROM 1H8 and a RAM 1H9. Meanwhile, the respective elements included in the imaging system 1 transmit/receive information to/from each other via a bus 1H10.

<Polarization camera>

The first imaging device 1H1 and the second imaging device 1H2 are, for example, so-called polarization cameras or the like. That is, the polarization camera can acquire polarization information that a photographic subject has. On the other hand, light is characterized by amplitude (brightness), wavelength (color) and polarization information. A human being can sense brightness and color of visible light, but cannot detect polarization information thereof. Accordingly, in order to capture a polarization component, which is polarization information, by a generally-used camera that does not capture the polarization component, it is necessary to arrange a polarization filter in front of the camera and to make adjustments observing a change in brightness while turning the polarization filter. On the other hand, the polarization camera can capture polarization components in real time without the adjustment for the polarization filter.

A dense parallax calculation such as SGM (Semi-Global Matching), which is employed in the present embodiment, obtains a parallax at each point (pixel), contrary to a sparse parallax calculation which obtains only parallaxes at feature points. The dense parallax calculation has an advantage in that parallax data can be acquired even in an image region with low texture, in which it is difficult to achieve high accuracy. However, accuracy in parallax in the image region with low texture is limited. Moreover, since parallax data for other image regions is obtained by also using information of the image region with low texture, it may have a negative influence on accuracy in parallax of the other image region. Thus, the present embodiment provides a quite useful proposal in the dense parallax calculation, in which a sufficient feature amount can be obtained even in the image region with low texture by using the above-described polarization camera, and then the accuracy of all the parallax data obtained by the dense parallax calculation can be enhanced.

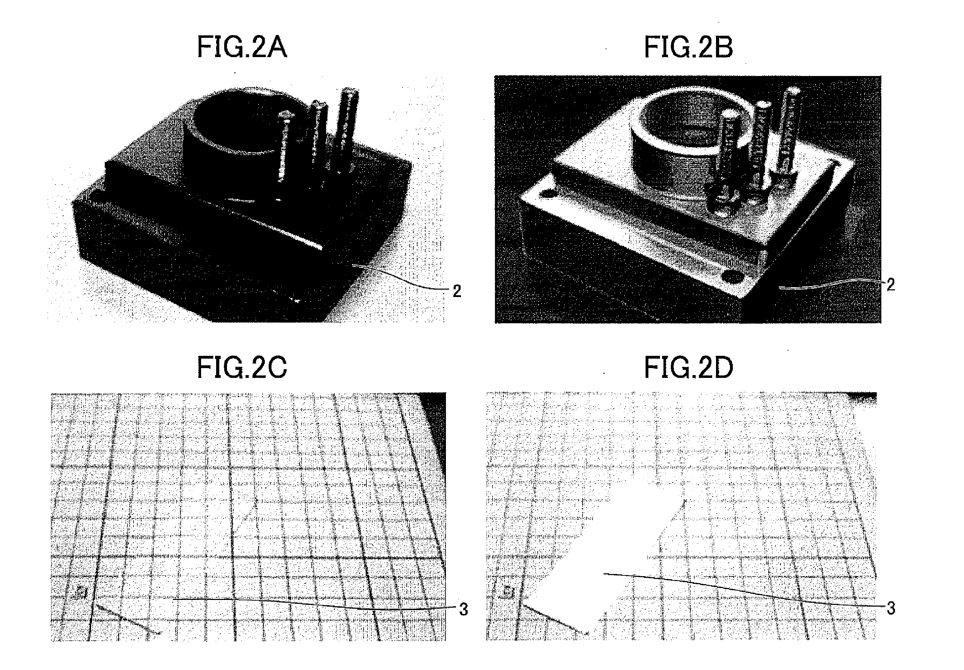

Figs. 2A to 2D are diagrams for explaining an example of a captured image captured by the polarization camera according to the present embodiment.

Fig. 2A illustrates an example of a captured image in which a black photographic subject is captured by using a generally-used camera which does not capture a polarization component.

Fig. 2B illustrates an example of a captured image in which a polarization component of the black photographic subject is captured by using a polarization camera.

Figs. 2A and 2B illustrate the same black photographic subject 2 captured by using the generally-used camera and the polarization camera, respectively.

In Fig. 2B, according to the polarization component captured by the polarization camera, an orientation of a surface of the black photographic subject 2 can be seen more easily compared with Fig. 2A.

Fig. 2C illustrates an example of a captured image in which a transparent photographic subject 3 is captured by using the generally-used camera which does not capture a polarization component.

Fig. 2D illustrates an example of a captured image in which a polarization component of the transparent photographic subject 3 is captured by using a polarization camera.

Figs. 2C and 2D illustrate the same transparent photographic subject 3 captured by using the generally-used camera and the polarization camera, respectively.

In Fig. 2D, according to the polarization component captured by the polarization camera, existence of the transparent photographic subject 3 can be recognized more easily compared with Fig. 2C.

The polarization camera can be realized by implementing a SWS (Sub-Wavelength Structure) polarization filter of an area-division type on a CMOS (Complementally Metal Oxide Semiconductor) sensor.

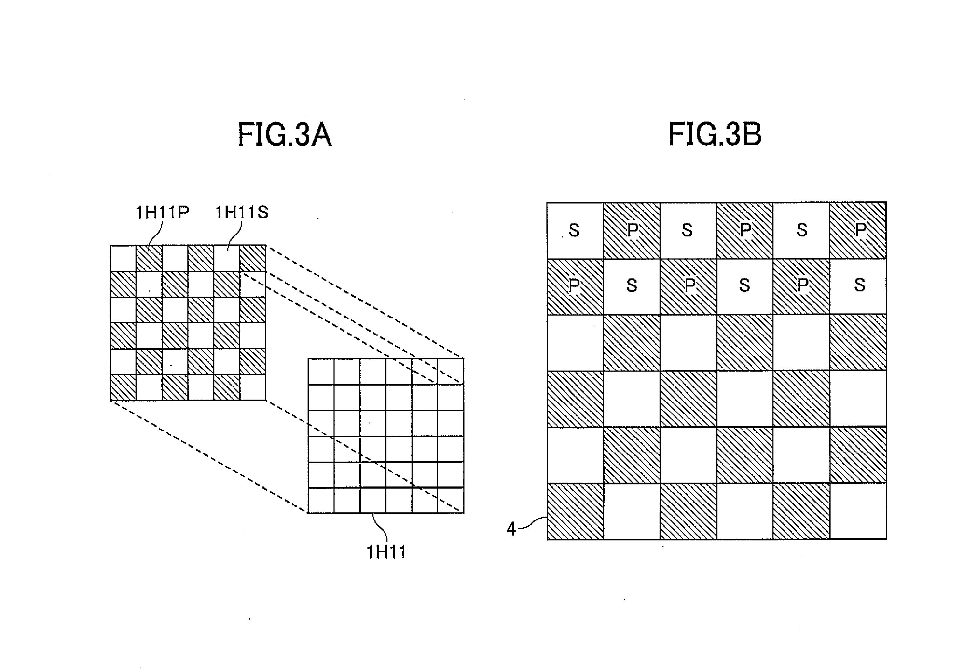

Figs. 3A and 3B are diagrams for explaining an example of a configuration of the polarization camera according to the present embodiment.

Fig. 3A is a diagram for explaining CMOS sensors included in the first imaging device 1H1 and the second imaging device 1H2.

A CMOS sensor 1H11 is provided with polarization filters in units of pixels or in hatched regions, shown in Fig. 3A, for example, in order to transmit a polarization component. In the following, the polarization filter shown in Fig. 3A will be explained as an example.

In Fig. 3A, a pixel indicated by the hatched region corresponds to a P polarization component, and a pixel indicated by the white region corresponds to an S polarization component. Specifically, a first polarization component is, for example, the P polarization component. On the other hand, a polarization component other than the first polarization component is, for example, a second polarization component. The second polarization component is, for example, the S polarization component. In the following, the P polarization component and the S polarization component will be explained as an example.

In the case of the polarization filter shown in Fig. 3A, the CMOS sensor 1H11 includes pixels corresponding to the P polarization component and pixels corresponding to the S polarization component which are alternately arranged in the vertical direction and in the horizontal direction. Therefore, the CMOS sensor 1H11 outputs a captured image in which the P polarization components and S polarization components are arranged alternately.

Fig. 3B is a diagram for explaining an example of a configuration of a captured image 4.

The captured image 4 is an example of a captured image output from the CMOS sensor 1H11, shown in Fig.

3A. Moreover, pixel data of the P polarization component and pixel data of the S polarization component are stored alternately in the captured image 4. Next, the imaging system 1 generates an image of the P polarization component (hereinafter, referred to as a P image) and an image of the S polarization component (hereinafter, referred to as an S image) from the captured image 4. For example, the P image and the S image are generated in preprocessing by extracting pixel data of corresponding pixels from the captured image 4 and interpolating pixels which do not have pixel data. Meanwhile, for the interpolation, the nearest neighbor method, the bi-linear interpolation method, the bi-cubic convolution method or the like can be employed, for example.

A polarization image is, for example, the P image or the S image. In the following, the P image and the S image will be explained as an example.

The polarization camera can realize real-time acquisition of polarization information, with which contrast can be recognized more easily compared with a generally-used camera, by arranging in high accuracy polarization filters in units of pixels or in the hatched regions, shown in Fig. 3B.

The image processing IC 1H3 performs image processing that the imaging system 1 performs for an image. Meanwhile, the image processing IC 1H3 is realized by a FPGA (Field-Programmable Gate Array), an ASIC (Application Specific Integrated Circuit) or the like.

The image processing IC 1H3 generates a polarization image or a polarization ratio image from captured images acquired from the respective first imaging device 1H1 and second imaging device 1H2, for example. Next, the image processing IC 1H3 performs, for example, dense parallax calculation. Meanwhile, the process performed by the image processing IC 1H3 will be described later in detail.

Moreover, the image processing IC 1H3 may perform so-called preprocessing. Specifically, the preprocessing includes, for example, noise reduction processing, distortion correction processing, gamma correction processing, shading correction processing or the like.

The first imaging device 1H1 and the second imaging device 1H2 are controlled through the control I/F 1H4.

The CPU 1H5 controls a variety of processing performed by the imaging system 1 and controls the respective devices included in the imaging system 1.

The ROM 1H8 stores information such as programs and data used by the CPU 1H5. Moreover, information is acquired from the ROM 1H8 through the ROM I/F 1H6.

The RAM 1H9 generates a memory area in which programs and data are loaded so that the CPU 1H5 performs predetermined processing, for example. Moreover, information is input/output to/from the RAM 1H9 through the RAM I/F 1H7.

Meanwhile, the configuration of the hardware is not limited to that shown in Fig. 1. For example, a part of or all of the processing that the image processing IC 1H3 performs may be performed by plural devices, such as ICs for which the CPU 1H5 performs processing or assists based on a program.

<Functional configuration>

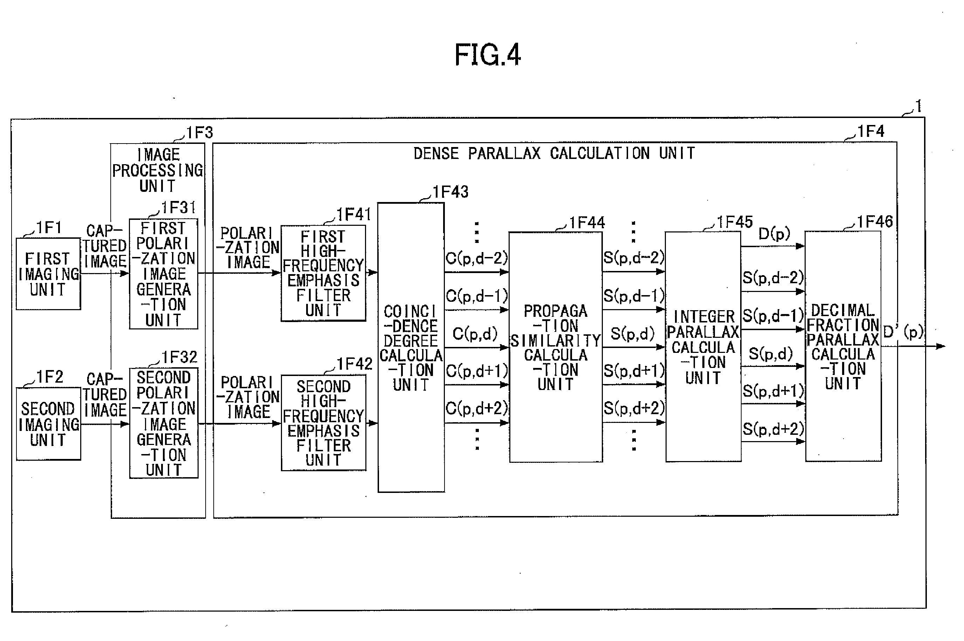

Fig. 4 is a functional block diagram for explaining an example of a functional configuration of the imaging system 1 according to the present embodiment.

The imaging system 1 includes a first imaging unit 1F1, a second imaging unit 1F2, an image processing unit 1F3 and a dense parallax calculation unit 1F4.

The first imaging unit 1F1 outputs a captured image. Meanwhile, the first imaging unit 1F1 is realized, for example, by the first imaging device 1H1 in Fig. 1 or the like.

The second imaging unit 1F2 outputs a captured image. Meanwhile, the second imaging unit 1F2 is realized, for example, by the second imaging device 1H2 in Fig. 1 or the like.

The image processing unit 1F3 includes, for example, a first polarization image generation unit 1F31 and a second polarization image generation unit 1F32. Meanwhile, the image processing unit 1F3 is realized, for example, by the image processing IC 1H3 in Fig. 1 or the like.

The first polarization image generation unit 1F31 acquires the captured image output by the first imaging unit 1F1, and generates a polarization image based on the acquired captured image.

The second polarization image generation unit 1F32 acquires the captured image output by the second imaging unit 1F2, and generates a polarization image based on the acquired captured image.

Processing in the image processing unit 1F3 is not limited to the generation of polarization images, i.e. the image processing unit 1F3 may perform, in addition to this, preprocessing or the like.

The dense parallax calculation unit 1F4 includes a first high-frequency emphasis filter unit 1F41, a second high-frequency emphasis filter unit 1F42, a coincidence degree calculation unit 1F43, a propagation similarity calculation unit 1F44, an integer parallax calculation unit 1F45, and a decimal fraction parallax calculation unit 1F46. Moreover, the dense parallax calculation unit 1F4 is realized by, for example, the image processing IC 1H3 in Fig. 1 or the like. Meanwhile, in the dense parallax calculation in the present embodiment, parallax data at a pixel of interest p(x,y) are calculated by using not only information on the pixel of interest p(x,y) on a reference image but also information on a pixel other than the pixel of interest p(x,y) according to a calculation method such as the SGM. Moreover, details of the SGM, refer to, for example, "Accurate and efficient stereo processing by semi-global matching and mutual information", H. Hirschmuller, IEEE Computer Society Conference on Computer Vision and Pattern Recognition, 2005, Vol. 2, pp. 807-814, or the like.

The first high-frequency emphasis filter unit 1F41 performs filter processing for emphasizing a high frequency part in an image for the polarization image output by the first polarization image generation unit 1F31.

The second high-frequency emphasis filter unit 1F42 performs filter processing for emphasizing a high frequency part in an image for the polarization image output by the second polarization image generation unit 1F32.

The coincidence degree calculation unit 1F43 performs processing for calculating a coincidence degree. Specifically, the coincidence degree calculation unit 1F43 acquires, for example, an image to be a reference output by the first high-frequency emphasis filter unit 1F41 (hereinafter, referred to as a reference image) and an image for comparing output by the second high-frequency emphasis filter unit 1F42 (hereinafter, referred to as a comparison image). Next, the coincidence degree calculation unit IF43 compares the reference image and the comparison image and calculates a coincidence degree C(p,d). That is, the coincidence degree C(p,d) represents a degree of coincidence between a reference pixel p(x,y) as a pixel of interest in the reference image and a comparison pixel q(x+d,y) in the comparison image. Meanwhile, in the present embodiment, the comparison between the reference pixel p(x,y) and the comparison pixel q(x+d,y) will be explained as an example. However, the coincidence degree calculation unit 1F43 may perform parallax calculation for a pixel group including plural pixels, for example.

The coincidence degree C(p,d) is an index indicating a degree of coincidence of the respective pixels between the reference image and the comparison image when the comparison image is shifted in the left or right direction in a screen with respect to the reference image, for example.

The coincidence degree C(p,d) is calculated by using, for example, SAD (sum of absolute difference).

Meanwhile, the method of calculating the coincidence degree C(p,d) is not limited to the SAD. For example, the calculation of the coincidence degree C(p,d) may be based on SSD (sum of squared difference). Moreover, the calculation of the coincidence degree C(p,d) may be based on NCC (normalized cross-correlation), POC (phase-only correlation) or the like.

In the following, the case where the coincidence degree is calculated based on the SAD will be explained as an example. In the following, the case where the SAD is obtained by calculating differences between brightness values of pixels for comparison will be explained as an example. Meanwhile, the SAD is obtained by comparing brightness values of pixels in the reference image with brightness values of pixels in the comparison image, and determining coincidence when the difference between the brightness values is small or zero. That is, in the case where the calculation result based on the SAD is a small value, it is highly likely that the respective pixels coincide with each other.

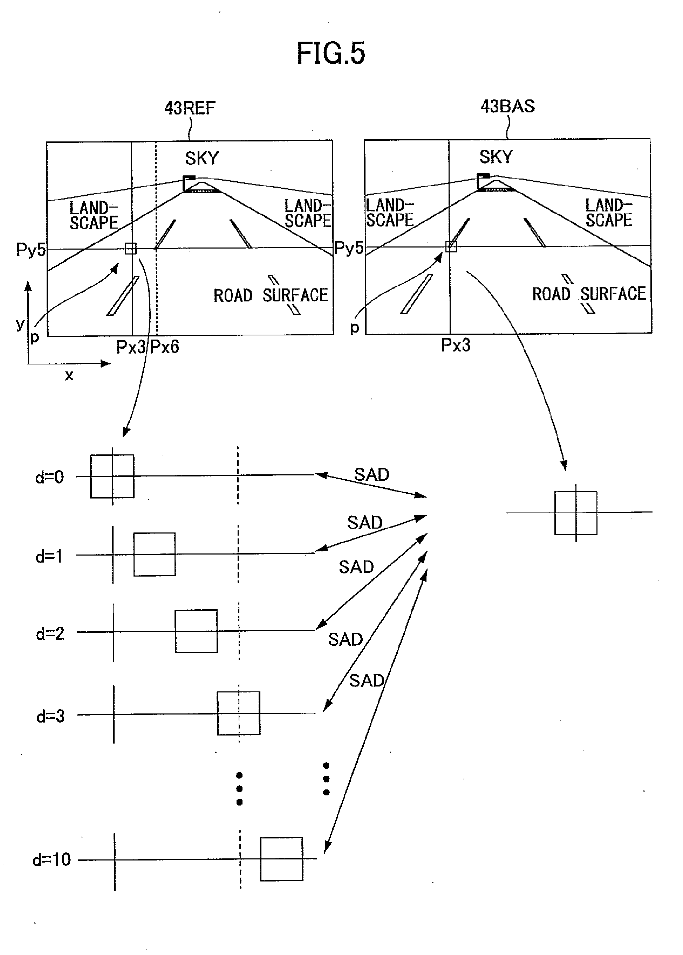

Fig. 5 is a diagram for explaining the calculation of a coincidence degree C(Px3, Py5) in the imaging system 1 according to the present embodiment.

In Fig. 5, the reference image is indicated by 43BAS and the comparison image is indicated by 43REF. Moreover, the reference image 43BAS and the comparison image 43REF are images which are obtained by imaging the same photographic subject at the same timing. That is, the second imaging device 1H2 is arranged at a position which is shifted leftward or rightward by a so-called base line length with respect to the first imaging device 1H1. Accordingly, the comparison image 43REF is imaged at a viewpoint moved leftward or rightward from the reference image 43BAS. In the following, the case shown in Fig. 5 will be explained as an example.

Fig. 5 is a diagram for explaining as an example the case where the coincidence degree C(Px3, Py5) is calculated at coordinates (Px3, Py5). Meanwhile, in Fig. 5, horizontal and vertical directions in the drawing are defined as x- and γ-directions, respectively.

The coincidence degree calculation unit 1F43 performs calculations for the coordinates (Px3, Py5) in the reference image 43BAS and for the coordinates (Px3, Py5) in the comparison image 43REF. Specifically, though the reference image 43BAS and the comparison image 43REF are obtained by imaging the same photographic subject at the same timing, a photographic subject imaged at the coordinates (Px3, Py5) of the reference image 43BAS is different from a photographic subject imaged at the coordinates (Px3, Py5) of the comparison image 43REF. Accordingly, the result of calculation based on the SAD shows a great value. Here, a difference between coordinate values in the x-direction of the coordinates in the reference image and in the comparison image is a parallax (hereinafter, referred to as a parallax d). Meanwhile, in the case of the coordinates of the reference image 43BAS (Px3, Py5) and of the coordinates of the comparison image 43REF, the parallax d is zero.

Next, the coincidence degree calculation unit 1F43 shifts the coordinates (Px3, Py5) of the comparison image 43REF by one pixel and performs calculations. That is, the parallax d is one (d=1), in this case. In the example shown in Fig. 5, even if the reference image 43BAS and the comparison image 43REF are arranged so that the parallax d=1, they are not the same, and the SAD shows a great value.

In the following the coincidence degree calculation unit 1F43 changes the parallax d to two, three, and more, and performs calculation for the respective pixels based on the SAD.

In the case of Fig. 5, the reference image 43BAS and the comparison image 43REF are the same when the parallax d is three (d=3), and the SAD shows a small value.

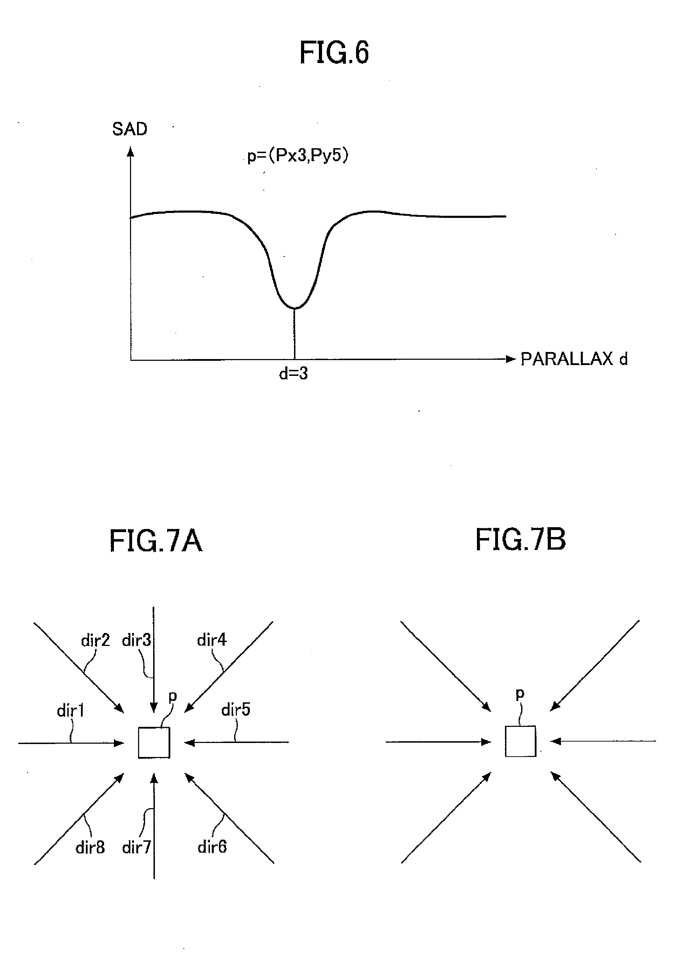

Fig. 6 is a diagram for explaining a result of calculation of the degree of coincidence (Px3, Py5) in the imaging system according to the present embodiment.

Fig. 6 shows results of calculation based on the SAD for the respective pixels calculated for each parallax d, while changing the parallax d for the coordinates (Px3, Py5) of the reference image 43BAS in Fig. 5, as explained in Fig. 5.

As shown in Fig. 5, since the reference image 43BAS and the comparison image 43REF are the same when the parallax d=3, the SAD shows the least value. In this case, when the parallax d is three (d=3), the result of calculation based on the SAD becomes the least value, the coincidence degree calculation unit 1F43 outputs the parallax d (d=3) as an output value to a post stage.

Meanwhile, Fig. 5 illustrates an example in the case where a calculation range for the SAD is one by one (1×1) pixel. Moreover, the present embodiment is not limited to the case where the calculation range is one by one (1×1) pixel. Since the calculation range for the SAD absorbs an assembling error of the imaging device or the like, for example, the calculation range may be determined taking account of peripheral pixels, i.e. 3x3 pixels.

The propagation similarity calculation unit 1F44 performs calculations according to the following equations (1) and (2) in the following:

[Formula 1]

$$Lr(p,d) = C(p,d) + \min\left(Lr(p-r,d), Lr(p-r,d-1) + P1, Lr(p-r,d+1) + P1, \min_{i} Lr(p-r,i) + P2\right)$$

(Equation 1)

[Formula 2]

$$S(p,d) = \sum_{r} Lr(p,d)$$

(Equation 2)

where d and C(p,d) are a parallax and a coincidence degree, as in Fig. 5.

The propagation similarity calculation unit 1F44 calculates an energy S(p,d) using the above-described equations (1) and (2) for a pixel of interest p. As shown in equation (2), the energy S(p,d) can be obtained by summing propagation parameters Lr(p,d).

Figs. 7A and 7B are diagrams for schematically explaining examples of propagations according to the present embodiment.

A propagation parameter Lr(p,d) is obtained by using equation (1), as described above and in Fig. 7A or 7B, for the pixel of interest p and in a direction r.

Fig. 7A illustrates an example in the case of obtaining the energy S(p,d) by summing the propagation parameters in eight directions.

Fig. 7B illustrates an example in the case of obtaining the energy S(p,d) by summing the propagation parameters in six directions.

According to equation (1), described as above, in the case where the propagation parameter Lr is L1 (Lr=L1), for example, the propagation parameter Lr is calculated based on a coincidence degree C(p,d) of the pixel of interest p and propagation parameters Lr of a pixel at the position on the left of the pixel of interest p with the respective parallaxes ("..., d-1, d, d+1, ...). That is, the propagation parameters in the direction of an arrow dir1, shown in Fig. 7A, are calculated serially from left to right.

Meanwhile, a calculation interval for the propagation parameter Lr is not limited to one pixel. For example, the propagation parameter Lr may be calculated based on propagation parameters Lr at a position adjacent to the pixel of interest p by n pixels (n is an arbitrary integer greater than one) with the respective parallaxes. Accordingly, the imaging system can perform calculation faster compared with the case where the propagation parameters are calculated with the calculation interval of one pixel.

Similarly, propagation parameters in the direction of an arrow dir2 are L2 (Lr=L2), and are calculated serially from upper left to lower right.

Similarly, propagation parameters in the direction of an arrow dir3 are L3 (Lr=L3), and are calculated serially from upper to lower.

Similarly, propagation parameters in the direction of an arrow dir4 are L4 (Lr=L4), and are calculated serially from upper right to lower left.

Similarly, propagation parameters in the direction of an arrow dir5 are L5 (Lr=L5), and are calculated serially from right to left.

Similarly, propagation parameters in the direction of an arrow dir6 are L6 (Lr=L6), and are calculated serially from lower right to upper left.

Similarly, propagation parameters in the direction of an arrow dir7 are L7 (Lr=L7), and are calculated serially from lower to upper.

Similarly, propagation parameters in the direction of an arrow dir8 are L8 (Lr=L8), and are calculated serially from lower left to upper right.

Meanwhile, the propagation similarity calculation unit 1F44 may perform calculation according to equation (3) as follows. Compared with equation (1), in equation (3) a value of a propagation parameter Lr, which is a minimum, is subtracted. Moreover, in the calculation of the propagation parameter Lr, in the case of equation (1), a value of the propagation parameter increases as the calculation proceeds. Therefore, especially in the case of realizing the calculation by hardware such as an IC, a circuit scale or a bit width is likely to become greater. On the other hand, in equation (3), since the minimum value of the propagation parameter is subtracted, the increase of the value of the propagation parameter as the calculation proceeds can be suppressed.

[Formula 3]

$$Lr(p,d) = C(p,d)$$
$$+ \min\left(Lr(p-r,d), Lr(p-r,d-1)+P1, Lr(p-r,d+1)+P1, \min_{i} Lr(p-r,i)+P2\right)$$
$$- \min_{k} Lr(p-r,k)$$

$$\text{(Equation 3)}$$

Next, the propagation similarity calculation unit 1F44 calculates a sum of the propagation parameters Lr in order to obtain the energy S(p,d) according to equation (2), as described above. For example, in the case of Fig. 7A, the energy S(p,d) is expressed by S(p,d)=L1(p,d)+L2(p,d)+L3(p,d)+L4(p,d)+L5(p,d)+L6(p,d)+L7(p,d)+L8(p,d).

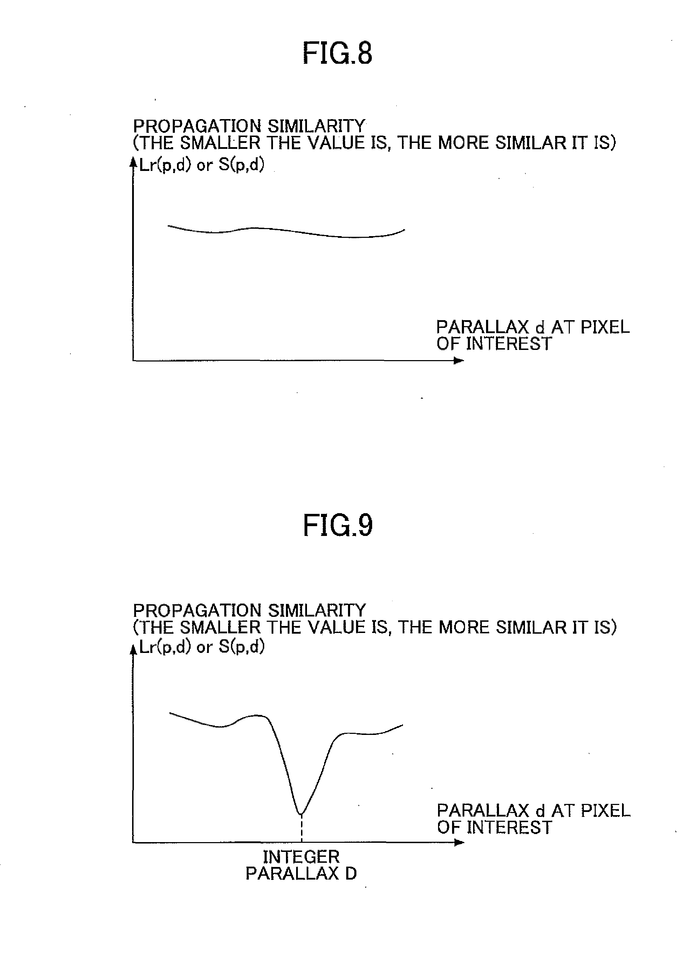

Fig. 8 is a diagram for explaining an example of a result of a dense parallax calculation for a brightness image.

Fig. 9 is a diagram for explaining an example of a result of dense parallax calculation for a polarization image according to the present embodiment.

Figs. 8 and 9 are diagrams illustrating an example of a result of dense parallax calculation for image regions with low textures.

The image region with low texture is an image region where a region having the same brightness value or similar color is nearby, or the like, such as a "road surface" part shown in Fig. 5, for example.

As shown in Fig. 8, the result of dense parallax calculation for a brightness image, which is a comparative example, shows that in the case of the image region with low texture, the energy S may be such that it is difficult to have a local minimum within a parallax search range in the propagation process.

On the contrary to Fig. 8, the result of the dense parallax calculation for a polarization image according to the present embodiment shows that the energy S easily acquires a local minimum within a parallax search range in the propagation process, as shown in Fig. 9, since the calculation is performed for the polarization image in which contrast can be secured.

The integer parallax calculation unit 1F45 calculates an integer parallax D(p), at which the energy S or the propagation parameter Lr takes the minimum value, based on the result of calculation by the propagation similarity calculation unit 1F44, as shown in Fig. 9.

The decimal fraction parallax calculation unit 1F46 calculates a decimal fraction parallax D', which is a subpixel of the integer parallax D(p) calculated by the integer parallax calculation unit 1F45, in order to enhance parallax accuracy.

The decimal fraction parallax calculation unit 1F46 calculates the decimal fraction parallax D' from energies of three points at the integer parallaxes D, D-1 and D+1, based on, for example, an equiangular straight-line method.

The decimal fraction parallax calculation unit 1F46 calculates the decimal fraction parallax D' from energies of five points at the integer parallaxes D, D-2, D-1, D+1 and D+2, based on, for example, a parabola fit method.

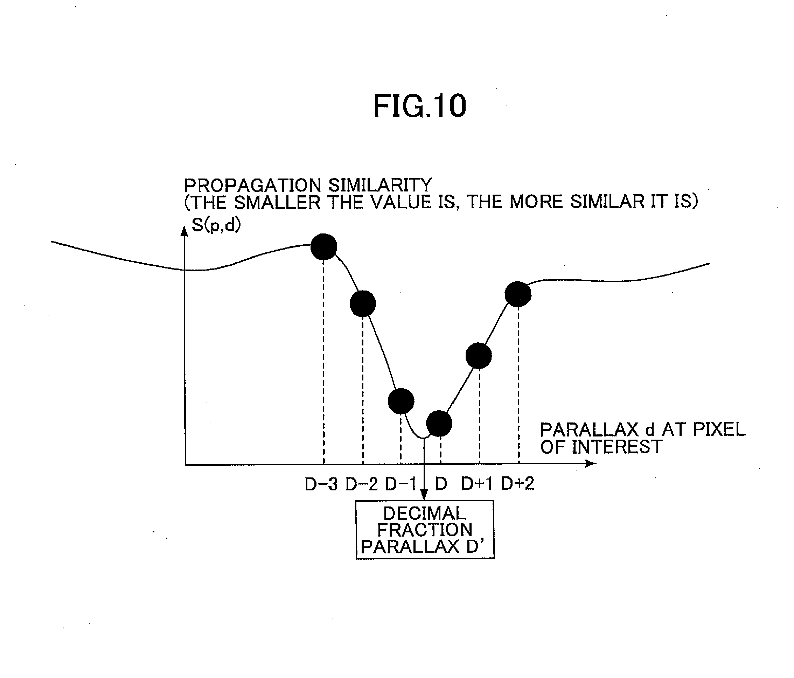

Fig. 10 is a diagram for explaining an example of a result of calculation for the decimal fraction parallax according to the present embodiment.

By calculating the decimal fraction parallax D', it becomes possible to obtain a point where the energy S or the propagation parameter Lr is less than that of the integer parallax D. Therefore, the parallax accuracy can be enhanced.

<Second embodiment>

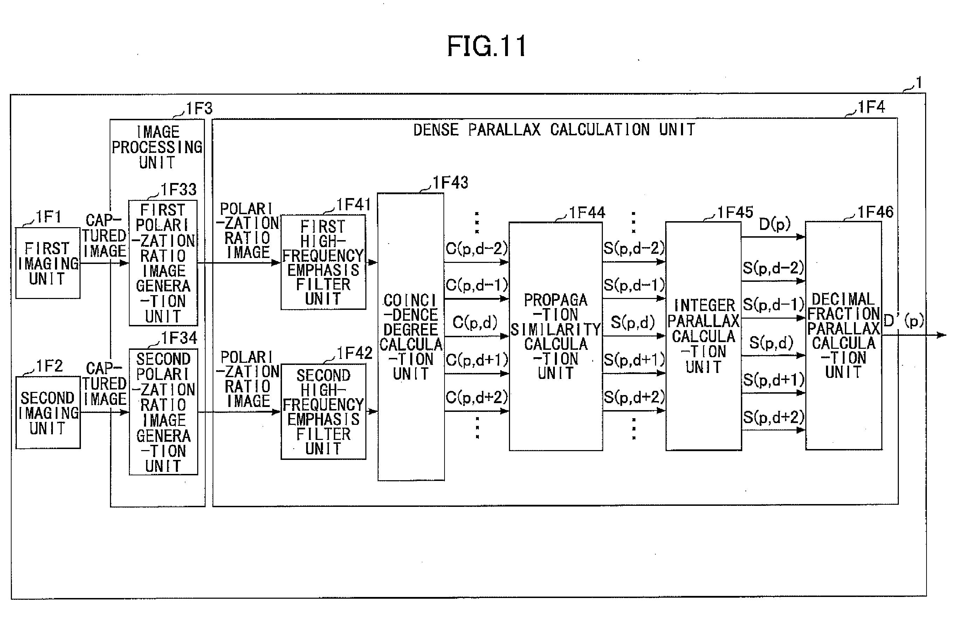

In the second embodiment, the same imaging system 1 as in the first embodiment will be used. Accordingly, an explanation of the hardware of the imaging system 1 will be omitted. Moreover, the imaging system according to the second embodiment has a functional configuration as shown in Fig. 11, for example.

Fig. 11 is a functional block diagram for explaining an example of the functional configuration of the imaging system 1 according to the second embodiment.

The imaging system 1 according to the second embodiment includes, for example, a first polarization ratio image generation unit 1F33 and a second polarization ratio image generation unit 1F34 instead of the first polarization image generation unit 1F31 and the second polarization image generation unit 1F32 in Fig. 4.

Each of the first polarization ratio image generation unit 1F33 and the second polarization ratio image generation unit 1F34 generates a polarization ratio image. Moreover, the polarization ratio image is generated based on the P image and the S image. Furthermore, the polarization ratio image is generated by calculating polarization ratio. Specifically, the polarization ratio image is generated based on a polarization ratio R, which is a ratio of a value P of the P image to a value S of the S image.

The polarization ratio R is calculated by a comparison value of a P polarization component with an S polarization component, e.g. $R=P/S$, $R=(P-S)/(P+S)$ or the like.

By using the polarization ratio image, accuracy in parallax calculation by the imaging system 1 for an image region with low texture can be enhanced.

<Result of processing>

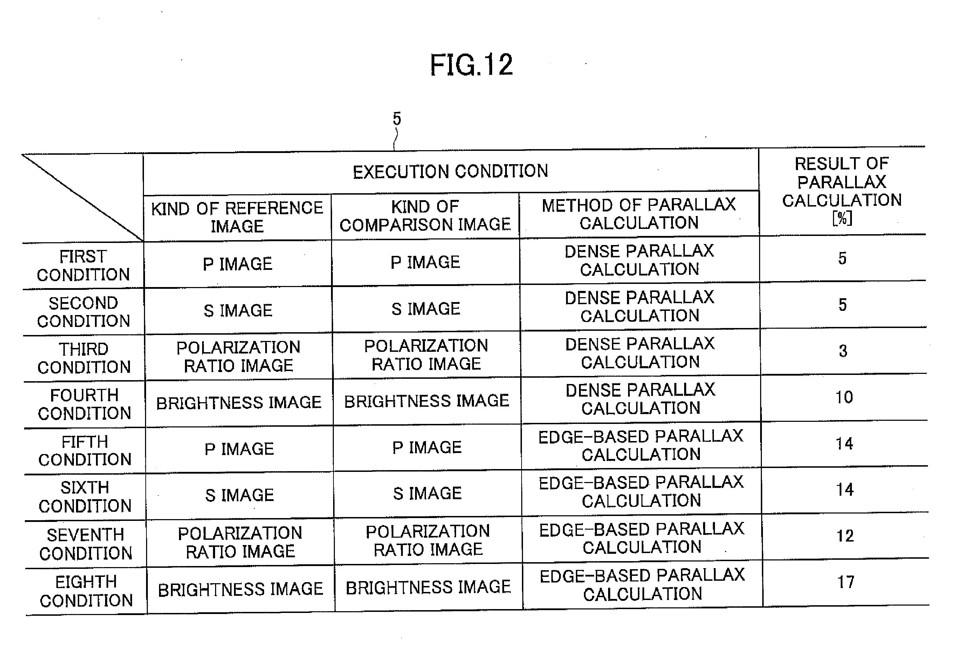

Fig. 12 is a table for explaining an example of a result of processing by the imaging system 1 according to the present embodiment.

Table of processing result 5 shows kinds of captured image to be processed in "kind of reference image" and "kind of comparison image".

Table of processing result 5 shows algorithms of processing for the captured image in "method of parallax calculation". Meanwhile, "dense parallax calculation" means a condition in which the processing by the algorithm of above-described equations (1) and (2) is performed.

Moreover, Table of processing result 5 shows "edge-based parallax calculation" meaning a condition in which processing by an algorithm for processing only pixels, at which changes of brightness or brightness values are discontinuous, i.e. a so-called edge part, is performed.

Table of processing result 5 shows results of parallax calculation for regions with low texture in "result of parallax calculation". Meanwhile, the result of parallax calculation is shown by a fraction of an amount of shift of the parallax calculation result from a preliminarily calculated parallax, i.e. a shift ratio.

Table of processing result 5 shows that the dense parallax calculation for a polarization image with "first condition" or "second condition" improves a parallax calculation result, compared with the cases of "fifth condition" and "sixth condition" for the edge parallax calculations. Accordingly, by performing the dense parallax calculation for a polarization image, the accuracy in the parallax calculation for an image region with low texture is enhanced.

Table of processing result 5 shows that the dense parallax calculation for a polarization image with "first condition" or "second condition" improves a parallax calculation result, compared with the case of "eighth condition" in which the edge parallax calculation is performed for a brightness image. Accordingly, by performing the dense parallax calculation for a polarization image, the accuracy in the parallax calculation for an image region with low texture is enhanced.

Table of processing result 5 shows that the dense parallax calculation for a polarization ratio image with "third condition" improves a parallax calculation result, compared with the cases of "first condition" and "second condition" in which the dense parallax calculation is performed for a polarization image. Accordingly, by performing the dense parallax calculation for a polarization ratio image, the accuracy in the parallax calculation for an image region with low texture is enhanced.

Table of processing result 5 shows that the dense parallax calculation for a polarization ratio image with "third condition" improves a parallax calculation result, compared with the cases of "fifth condition" to "eighth condition" for the edge parallax calculations. Accordingly, by performing the dense parallax calculation for a polarization ratio image, the accuracy in the parallax calculation for an image region with low texture is enhanced.

Table of processing result 5 shows that the dense parallax calculation for a polarization image or a polarization ratio image with any one of "first condition" to "third condition" improves a parallax calculation result, compared with the case of "fourth condition" in which the dense parallax calculation is performed for a brightness image. Accordingly, by performing the dense parallax calculation for a polarization ratio image or a polarization image, the accuracy in the parallax calculation for an image region with low texture is enhanced.

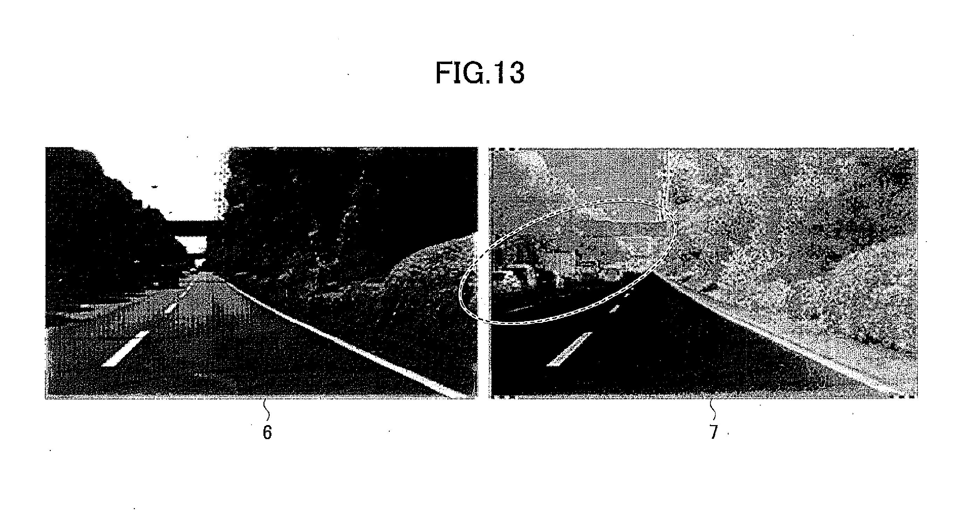

Fig. 13 is a diagram for explaining an example of a result of processing by the imaging system 1 according to the present embodiment.

A brightness image 6 is an example of "brightness image" used for, for example, "fourth condition" and "eighth condition" shown in Fig. 12. Moreover, a polarization image 7 is an example of "P image" used for, for example, "first condition" shown in Fig. 12.

As shown in the polarization image 7, by using the "P image", the imaging system can detect easily a vehicle or the like which is in a shade of trees.

Meanwhile, in the present embodiment, any combination of two kinds selected from a polarization image, a polarization ratio image and a brightness image may be used for the captured images.

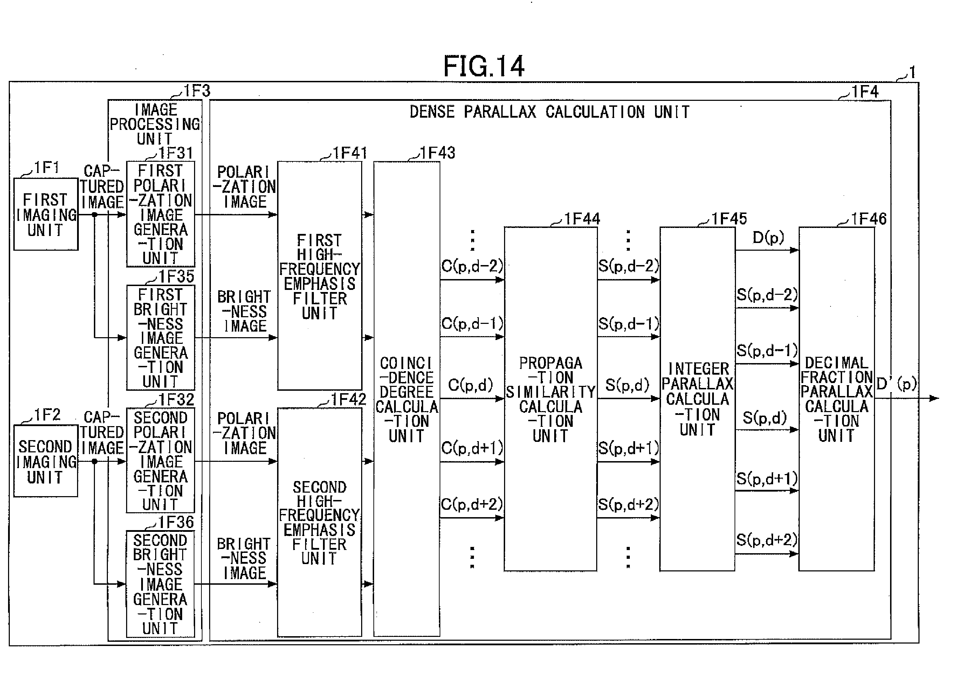

Fig. 14 is a functional block diagram for explaining an example of a functional configuration of an imaging system 1 according to a third embodiment.

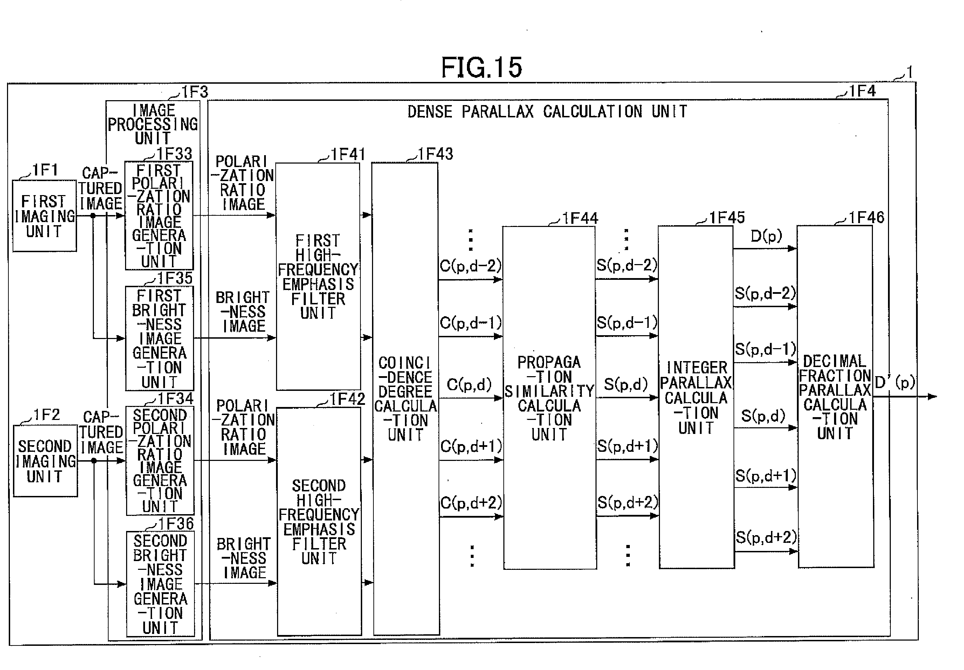

Fig. 15 is a functional block diagram for explaining an example of a functional configuration of an imaging system 1 according to a fourth embodiment.

A configuration of an image processing unit 1F3 of the imaging system 1 according to the third embodiment shown in Fig. 14 is different from that of the imaging system 1 shown in Fig. 4. Moreover, a configuration of an image processing unit 1F3 of the imaging system 1 according to the fourth embodiment shown in Fig. 15 is different from that of the imaging system 1 shown in Fig. 11.

Each of a first brightness image generation unit 1F35 and a second brightness image generation unit 1F36 generates a brightness image.

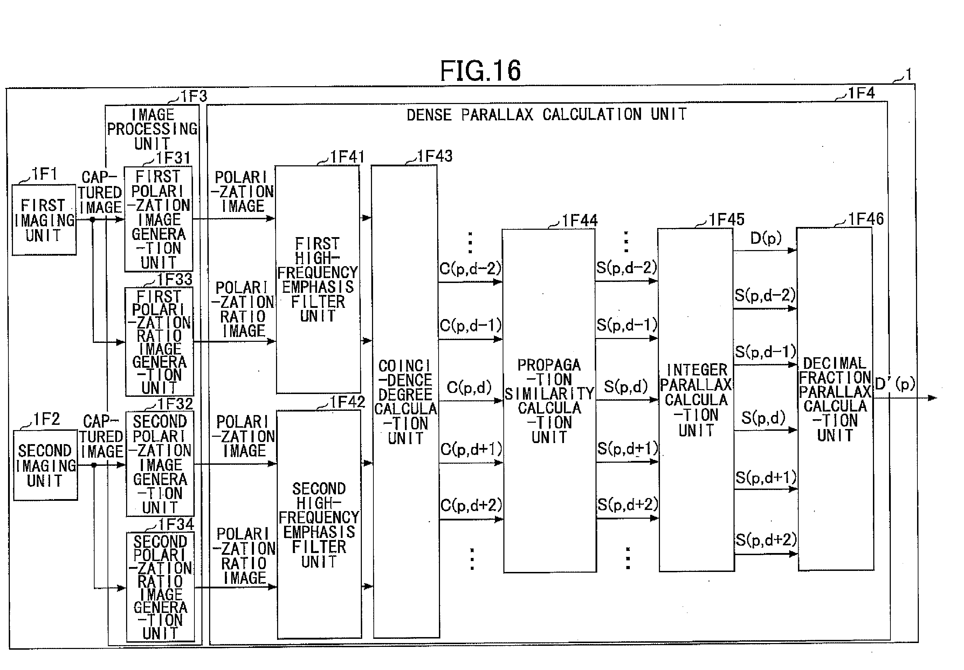

Fig. 16 is a functional block diagram for explaining an example of a functional configuration of an imaging system 1 according to a fifth embodiment.

As shown in Fig. 16, in the imaging system 1, a combination of a polarization image and a polarization ratio image may be employed.

Moreover, the imaging system 1 according to any one of the third to fifth embodiments, shown respectively in Figs. 14 to 16, may be provided with a function of selecting respective calculation results for a polarization image, a polarization ratio image and a brightness image.

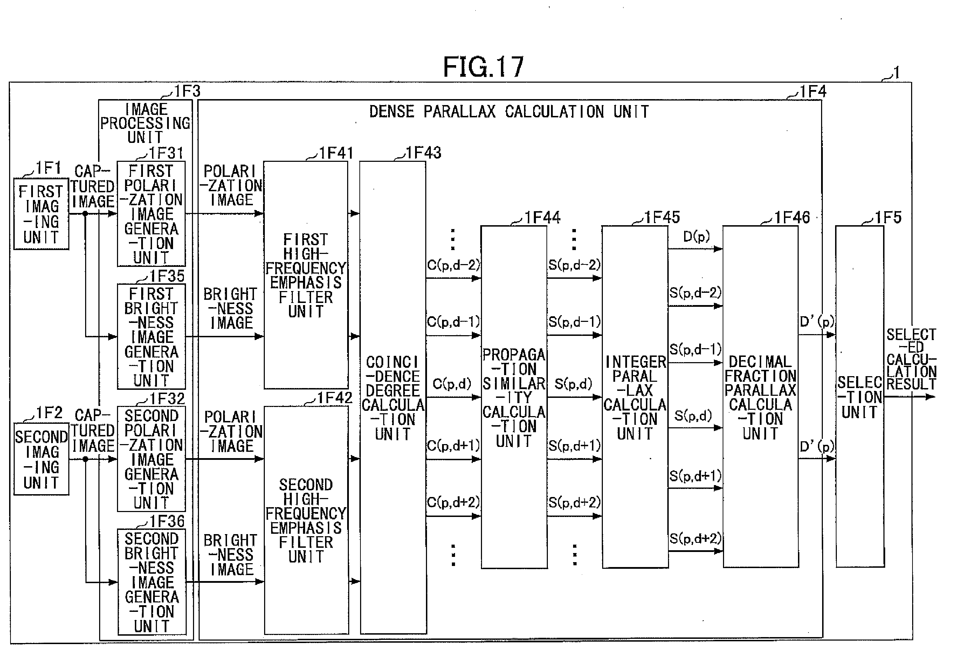

Fig. 17 is a functional block diagram for explaining an example of a functional configuration of an imaging system 1 according to a sixth embodiment.

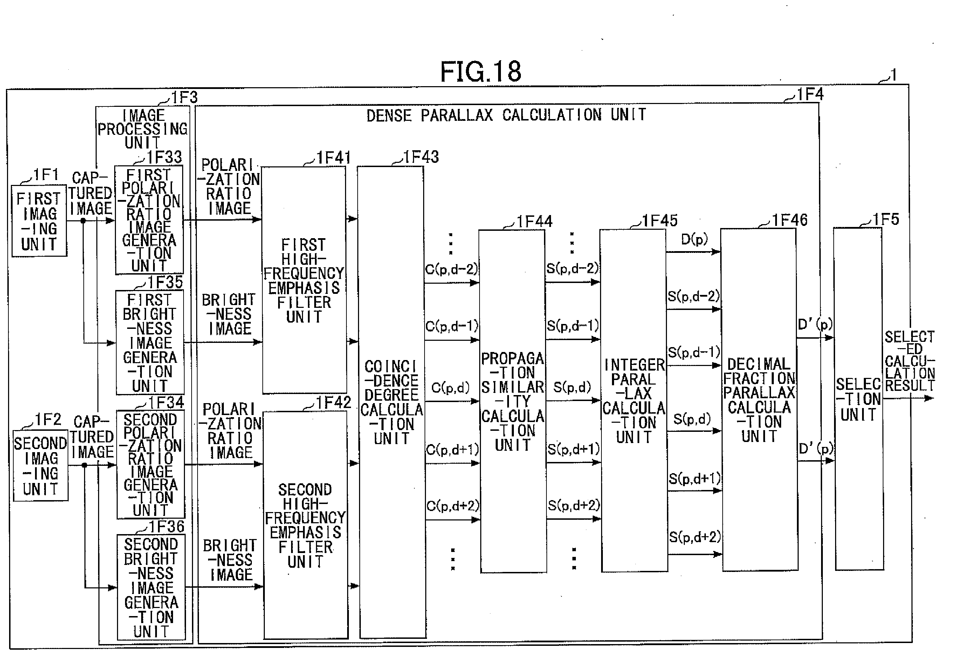

Fig. 18 is a functional block diagram for explaining an example of a functional configuration of an imaging system 1 according to a seventh embodiment.

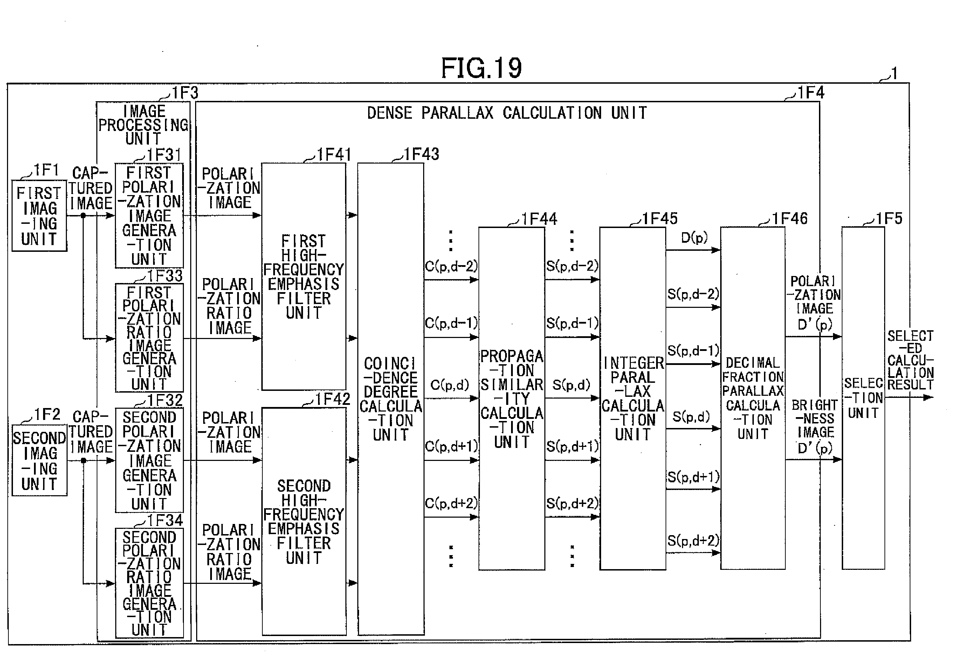

Fig. 19 is a functional block diagram for explaining an example of a functional configuration of an imaging system 1 according to an eighth embodiment.

Difference between the imaging system 1 according to the sixth embodiment shown in Fig. 17 and the imaging system 1 shown in Fig. 14 is that the imaging system 1 according to the sixth embodiment is provided with a selection unit 1F5. Moreover, difference between the imaging system 1 according to the seventh embodiment shown in Fig. 18 and the imaging system 1 shown in Fig. 15 is that the imaging system 1 according to the seventh embodiment is provided with a selection unit 1F5. Furthermore, difference between the imaging system 1 according to the eighth embodiment shown in Fig. 19 and the imaging system 1 shown in Fig. 16 is that the imaging system 1 according to the eighth embodiment is provided with a selection unit 1F5.

In the imaging system 1 shown in any one of Figs. 17 to 19, the dense parallax calculation unit 1F4 performs calculation for a polarization image or a polarization ratio image and for a brightness image, for example, and the selection unit 1F5 selects one of the calculated values for use as a parallax value. For example, the selection unit 1F5 performs the selection according to whether it is a region with low texture. Meanwhile, the selection unit 1F5 is realized by, for example, the image processing IC 1H3 in Fig. 1 or the like.

Meanwhile, the imaging system 1 may perform processing combining with recognition of a vehicle or a person, i.e. so-called recognition processing.

<Histogram enlargement processing>

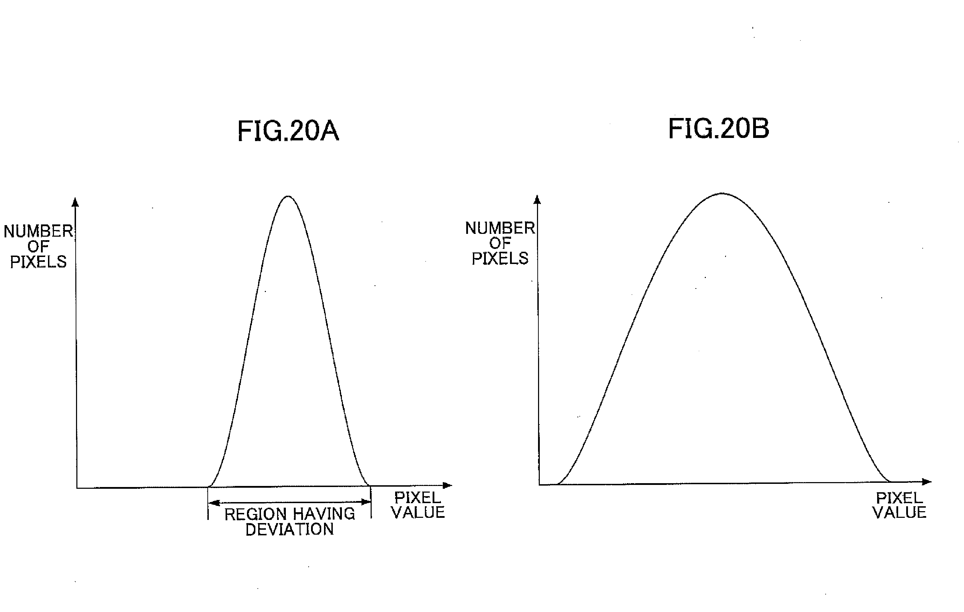

Figs. 20A and 20B are diagrams for explaining an example of a histogram enlargement process by the imaging system 1 according to the present embodiment.

Fig. 20A is a diagram illustrating an example in the case where a histogram (frequency distribution of a pixel value) has deviation.

Fig. 20B is a diagram illustrating an example of an effect of the histogram enlargement processing.

In the case where the histogram has deviation as illustrated, the histogram enlargement processing, for example, enlarges a region having deviation. The enlarged region having deviation is illustrated in Fig. 20B. That is, pixel values of the respective pixels are changed so that the frequency distribution of the pixel values is widened.

The imaging system 1 performs the histogram enlargement processing, and enhances contrast of an image having low contrast.

The histogram enlargement processing is performed for a polarization image or a polarization ratio image.

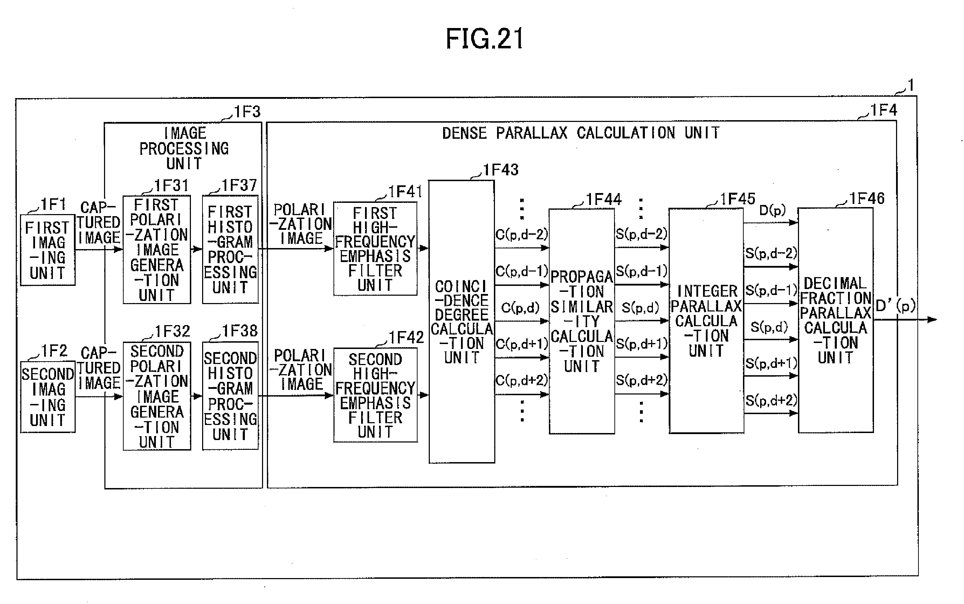

Fig. 21 is a functional block diagram for explaining an example of a functional configuration of an imaging system 1 according to a ninth embodiment.

A configuration of the image processing unit 1F3 of the imaging system 1 according to the ninth embodiment shown in Fig. 21 is different from that of the imaging system 1 shown in Fig. 4.

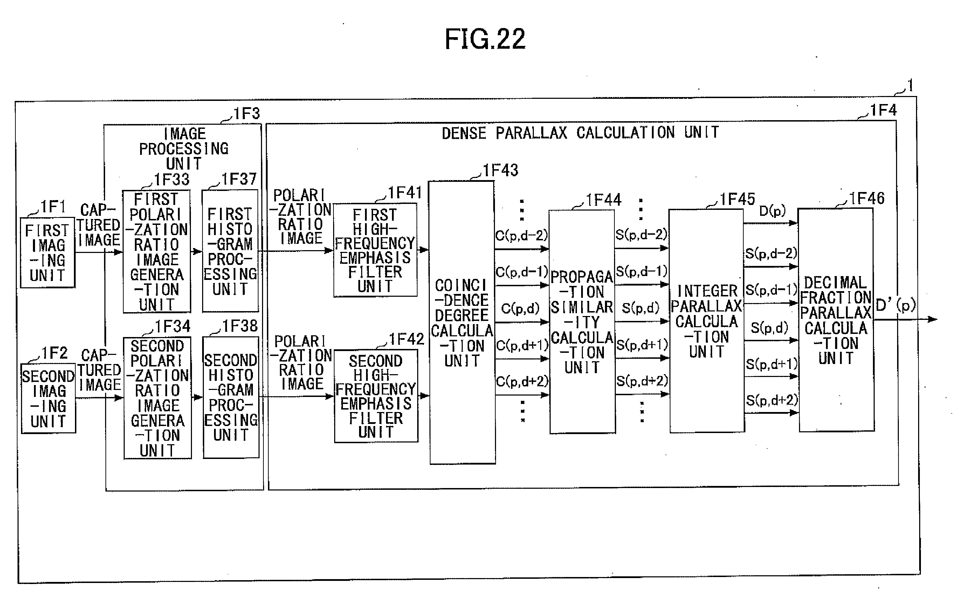

Fig. 22 is a functional block diagram for explaining an example of a functional configuration of an imaging system 1 according to a tenth embodiment.

A configuration of the image processing unit 1F3 of the imaging system 1 according to the tenth embodiment shown in Fig. 22 is different from that of the imaging system 1 shown in Fig. 11.

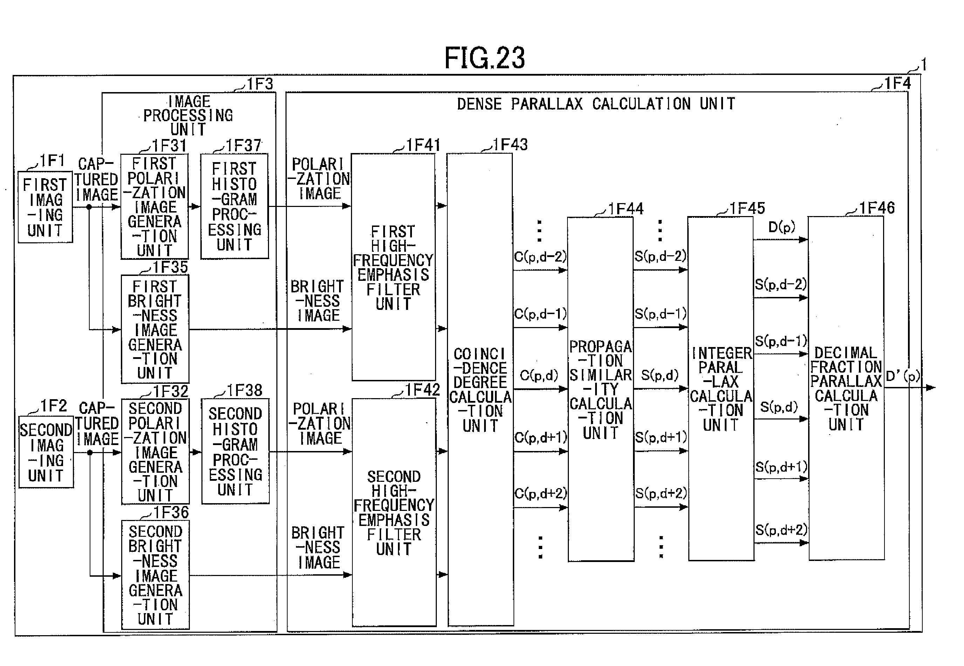

Fig. 23 is a functional block diagram for explaining an example of a functional configuration of an imaging system 1 according to an eleventh embodiment.

A configuration of the image processing unit 1F3 of the imaging system 1 according to the eleventh embodiment shown in Fig. 23 is different from that of the imaging system 1 shown in Fig. 14.

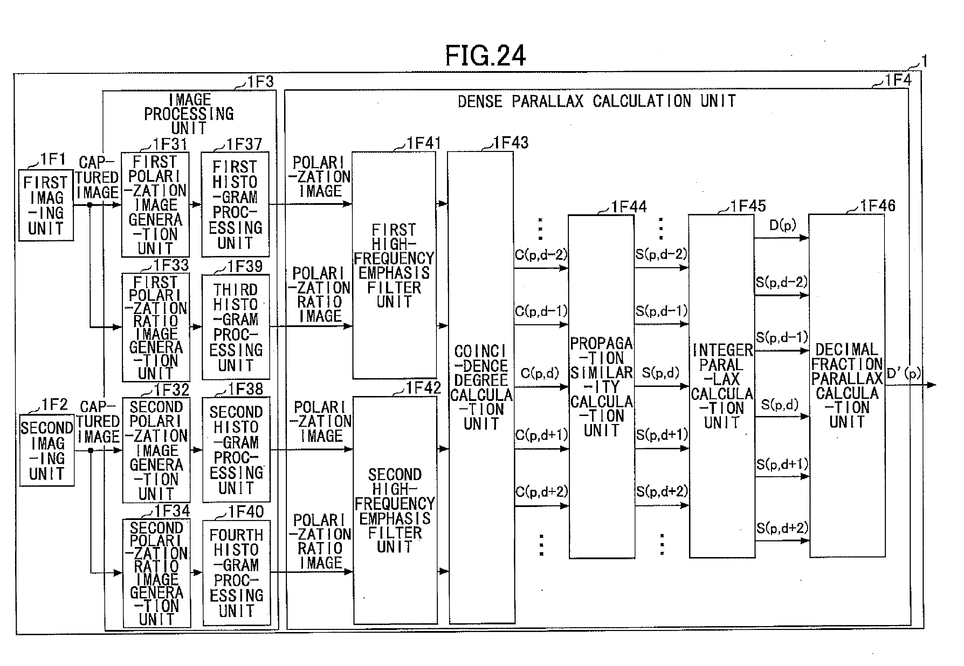

Fig. 24 is a functional block diagram for explaining an example of a functional configuration of an imaging system 1 according to a twelfth embodiment.

A configuration of the image processing unit 1F3 of the imaging system 1 according to the twelfth embodiment shown in Fig. 24 is different from that of the imaging system 1 shown in Fig. 16.

Meanwhile, the imaging system 1 according to the present embodiment may perform selection processing after the histogram enlargement processing and the dense parallax calculation.

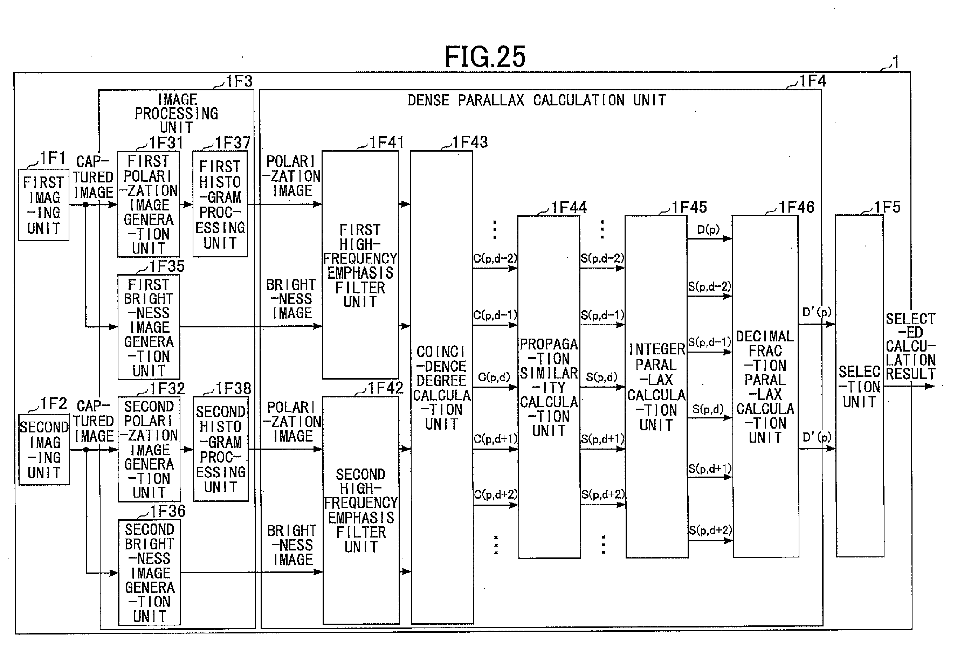

Fig. 25 is a functional block diagram for explaining an example of a functional configuration of an imaging system 1 according to a thirteenth embodiment.

Difference between the imaging system 1 according to the thirteenth embodiment shown in Fig. 25 and the imaging system 1 shown in Fig. 23 is that the imaging system 1 according to the thirteenth embodiment is provided with a selection unit 1F5.

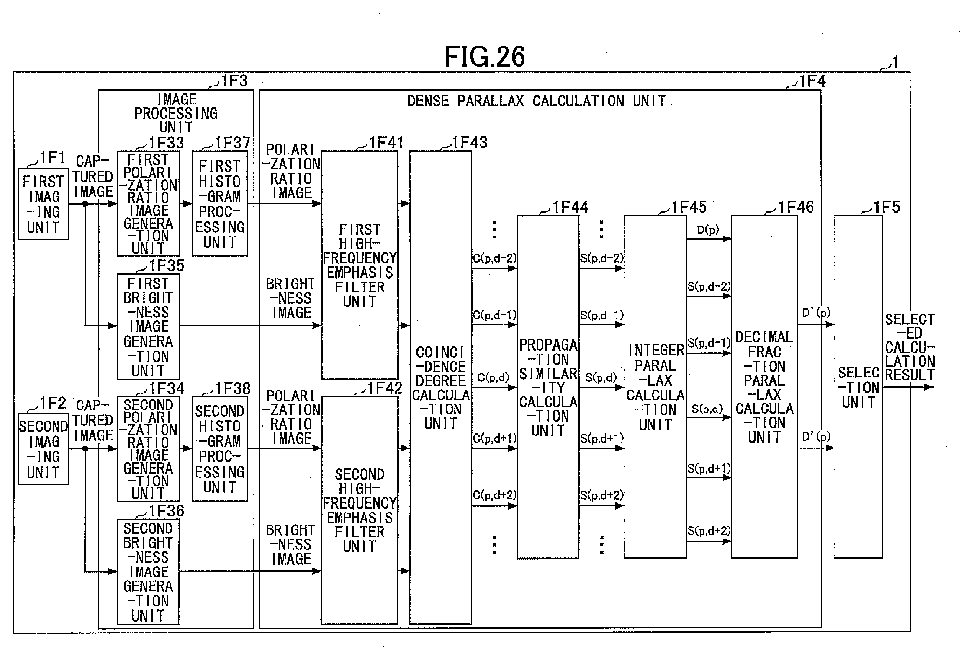

Fig. 26 is a functional block diagram for explaining an example of a functional configuration of an imaging system 1 according to a fourteenth embodiment.

A configuration of the image processing unit 1F3 of the imaging system 1 according to the fourteenth embodiment shown in Fig. 26 is different from that of the imaging system 1 shown in Fig. 18.

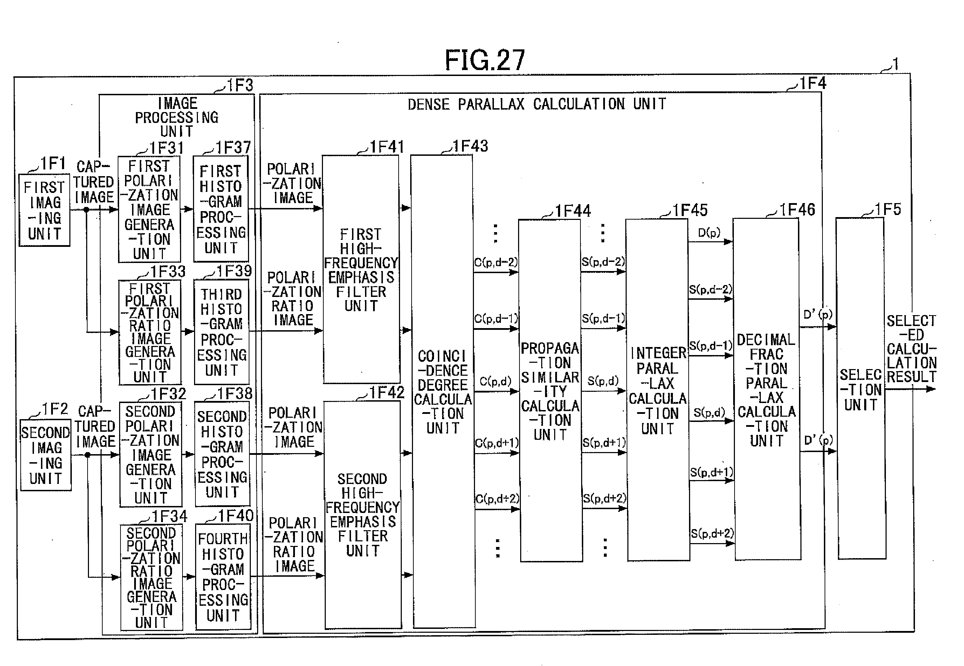

Fig. 27 is a functional block diagram for explaining an example of a functional configuration of an imaging system 1 according to a fifteenth embodiment.

Difference between the imaging system 1 according to the fifteenth embodiment shown in Fig. 27 and the imaging system 1 shown in Fig. 24 is that the imaging system 1 according to the fifteenth embodiment is provided with a selection unit 1F5.

Each of the first histogram processing unit 1F37 to the fourth histogram processing unit 1F40 performs the histogram enlargement processing explained with reference to Figs. 20A and 20B for a polarization image or a polarization ratio image. Meanwhile, the first histogram processing unit 1F37 to the fourth histogram processing unit 1F40 are realized by, for example, the image processing IC 1H3 shown in Fig. 1 or the like.

The present invention can be applied in technical fields of vehicle mounting and factory automation (FA). However, the application of the present invention is not limited to this. The present invention can be applied widely in technical fields of, for example, security, medicine, food and the like.

Further, the present invention is not limited to these embodiments, but various variations and modifications may be made without departing from the scope of the present invention.

The respective units included in the imaging system according to the embodiments described as above may be included in an apparatus.

The present application is based on and claims the benefit of priority of Japanese Priority Applications No. 2014-037502 filed on February 27, 2014 and No. 2015-004787 filed on January 14, 2015, the entire contents of which are hereby incorporated by reference.

**Claims**

1. An information processing method for measuring a distance to an object imaged on a captured image, comprising:

    acquiring a plurality of captured images, on each of which the object is imaged, each of the captured images including pixel data having a first polarization component of light emitted from the object and pixel data having a second polarization component of the light emitted from the object, the first polarization component and the second polarization component being orthogonal to each other;

generating a plurality of polarization images from the plurality of captured images, respectively, each of the polarization images being any one of a first polarization image including pixel data having the first polarization component, a second polarization image including pixel data having the second polarization component and a polarization ratio image including pixel data having a ratio of the first polarization component to the second polarization component; and

determining a parallax between the polarization images.

2. The information processing method as claimed in claim 1, wherein the parallax between the polarization images is determined so that a sum of values obtained based on differences between brightness values at pixels in regions included in the respective polarization images become minimum, the regions in the polarization images corresponding to each other.

3. The information processing method as claimed in claim 1 further comprising:

generating brightness images from the respective captured images, each of the brightness images including a brightness component of the light emitted from the object; and

determining a parallax between the brightness images, wherein each of the polarization images is one of the first polarization image and the second polarization image.

4. The information processing method as claimed in claim 1, further comprising:

generating brightness images from the respective captured images, each of the brightness images including a brightness component of the light emitted from the object; and

determining a parallax between the brightness images, wherein each of the polarization images is the polarization ratio image.

5. The information processing method as claimed in any one of claims 1 to 4, further comprising changing pixel values of the respective pixels in each of the polarization images so as to widen a frequency distribution of the pixel values.

6. The information processing method as claimed in claim 3 or 4, further comprising selecting one of the parallax between the polarization images and the parallax between the brightness images.

7. The information processing method as claimed in claim 1, further comprising:

generating a plurality of polarization ratio images from the plurality of captured images, respectively; and

determining a parallax between the polarization ratio images, wherein each of the polarization images is one of the first polarization image and the second polarization image.

8. The information processing method as claimed in claim 7, further comprising changing pixel values of the respective pixels in each of the polarization images and the polarization ratio images so as to widen a frequency distribution of the pixel values.

9. An information processing system for measuring a distance to an object imaged on a captured image, comprising:

a plurality of imaging devices configured to capture a plurality of captured images, on each of which the object is imaged, each of the captured images including pixel data having a first polarization component of light emitted from the object and pixel data having a second polarization component of the light emitted from the object, the first polarization component and the second polarization component being orthogonal to each other;

a generation unit configured to generate a plurality of polarization images from the plurality of captured images captured by the imaging devices, respectively, each of the polarization images being any one of a first polarization image including pixel data having the first polarization component, a second polarization image including pixel data having the second polarization component and a polarization ratio image including pixel data having a ratio of the first polarization component to the second polarization component; and

a parallax determination unit configured to determine a parallax between the polarization images generated by the generation unit.

**10.** A non-transitory computer-readable storage medium storing a program for causing an information processing system including a plurality of imaging units to execute a process of measuring a distance to an object imaged on a captured image, the process comprising:

acquiring a plurality of captured images by the plurality of imaging units, the object being imaged on each of the captured images, each of the captured images including pixel data having a first polarization component of light emitted from the object and pixel data having a second polarization component of the light emitted from the object, the first polarization component and the second polarization component being orthogonal to each other;

generating a plurality of polarization images from the plurality of captured images, respectively, each of the polarization images being any one of a first polarization image including pixel data having the first polarization component, a second polarization image including pixel data having the second polarization component and a polarization ratio image including pixel data having a ratio of the first polarization component to the second polarization component; and

determining a parallax between the polarization images.

**11.** An information processing apparatus for measuring a distance to an object imaged on a captured image, comprising:

a plurality of imaging units configured to capture a plurality of captured images, on each of which the object is imaged, each of the captured images including pixel data having a first polarization component of light emitted from the object and pixel data having a second polarization component of the light emitted from the object, the first polarization component and the second polarization component being orthogonal to each other;

a generation unit configured to generate a plurality of polarization images from the plurality of captured images captured by the imaging units, respectively, each of the polarization images being any one of a first polarization image including pixel data having the first polarization component, a second polarization image including pixel data having the second polarization component and a polarization ratio image including pixel data having a ratio of the first polarization component to the second polarization component; and

a parallax determination unit configured to determine a parallax between the polarization images generated by the generation unit.

# FIG.1

EP 2 913 797 A1

FIG.2B

FIG.2A

FIG.2D

FIG.2C

# FIG.3A

1H11P    1H11S

1H11

# FIG.3B

| S | P | S | P | S | P |
|---|---|---|---|---|---|
| P | S | P | S | P | S |

4

EP 2 913 797 A1

18

# FIG.4

EP 2 913 797 A1

# FIG.5

# FIG.6

# FIG.7A          FIG.7B

# FIG.8

PROPAGATION SIMILARITY
(THE SMALLER THE VALUE IS, THE MORE SIMILAR IT IS)
$Lr(p,d)$ or $S(p,d)$

PARALLAX d AT PIXEL
OF INTEREST

# FIG.9

PROPAGATION SIMILARITY
(THE SMALLER THE VALUE IS, THE MORE SIMILAR IT IS)
$Lr(p,d)$ or $S(p,d)$

PARALLAX d AT PIXEL
OF INTEREST

INTEGER
PARALLAX D

# FIG.10

PROPAGATION SIMILARITY
(THE SMALLER THE VALUE IS, THE MORE SIMILAR IT IS)

$S(p,d)$

PARALLAX d AT PIXEL
OF INTEREST

D-3  D-2  D-1  D  D+1  D+2

DECIMAL
FRACTION
PARALLAX D'

EP 2 913 797 A1

FIG.11

**1F4 — DENSE PARALLAX CALCULATION UNIT**

1F3 IMAGE PROCESSING UNIT

1F1 FIRST IMAGING UNIT → CAPTURED IMAGE → 1F33 FIRST POLARIZATION RATIO IMAGE GENERATION UNIT → POLARIZATION RATIO IMAGE → 1F41 FIRST HIGH-FREQUENCY EMPHASIS FILTER UNIT

1F2 SECOND IMAGING UNIT → CAPTURED IMAGE → 1F34 SECOND POLARIZATION RATIO IMAGE GENERATION UNIT → POLARIZATION RATIO IMAGE → 1F42 SECOND HIGH-FREQUENCY EMPHASIS FILTER UNIT

1F43 COINCIDENCE DEGREE CALCULATION UNIT → $C(p,d-2)$, $C(p,d-1)$, $C(p,d)$, $C(p,d+1)$, $C(p,d+2)$

1F44 PROPAGATION SIMILARITY CALCULATION UNIT → $S(p,d-2)$, $S(p,d-1)$, $S(p,d)$, $S(p,d+1)$, $S(p,d+2)$

1F45 INTEGER PARALLAX CALCULATION UNIT → $D(p)$, $S(p,d-2)$, $S(p,d-1)$, $S(p,d)$, $S(p,d+1)$, $S(p,d+2)$

1F46 DECIMAL FRACTION PARALLAX CALCULATION UNIT → $D'(p)$

# FIG.12

EP 2 913 797 A1

5

| | EXECUTION CONDITION | | | RESULT OF PARALLAX CALCULATION [%] |
|---|---|---|---|---|
| | KIND OF REFERENCE IMAGE | KIND OF COMPARISON IMAGE | METHOD OF PARALLAX CALCULATION | |
| FIRST CONDITION | P IMAGE | P IMAGE | DENSE PARALLAX CALCULATION | 5 |
| SECOND CONDITION | S IMAGE | S IMAGE | DENSE PARALLAX CALCULATION | 5 |
| THIRD CONDITION | POLARIZATION RATIO IMAGE | POLARIZATION RATIO IMAGE | DENSE PARALLAX CALCULATION | 3 |
| FOURTH CONDITION | BRIGHTNESS IMAGE | BRIGHTNESS IMAGE | DENSE PARALLAX CALCULATION | 10 |
| FIFTH CONDITION | P IMAGE | P IMAGE | EDGE-BASED PARALLAX CALCULATION | 14 |
| SIXTH CONDITION | S IMAGE | S IMAGE | EDGE-BASED PARALLAX CALCULATION | 14 |
| SEVENTH CONDITION | POLARIZATION RATIO IMAGE | POLARIZATION RATIO IMAGE | EDGE-BASED PARALLAX CALCULATION | 12 |
| EIGHTH CONDITION | BRIGHTNESS IMAGE | BRIGHTNESS IMAGE | EDGE-BASED PARALLAX CALCULATION | 17 |

FIG.13

6

7

EP 2 913 797 A1

# FIG.14

EP 2 913 797 A1

# FIG.15

FIG.16

FIG.17

1

1F3

IMAGE PROCESSING UNIT

1F4

DENSE PARALLAX CALCULATION UNIT

1F1

FIRST IMAG-ING UNIT

CAP-TURED IMAGE

1F31

FIRST POLARI-ZATION IMAGE GENERA-TION UNIT

POLARI-ZATION IMAGE

1F41

FIRST HIGH-FREQUENCY EMPHASIS FILTER UNIT

1F43

1F44

1F45

1F46

1F5

1F35

FIRST BRIGHT-NESS IMAGE GENERA-TION UNIT

BRIGHT-NESS IMAGE

D(p)

C(p,d−2)

S(p,d−2)

S(p,d−2)

C(p,d−1)

S(p,d−1)

S(p,d−1)

COINCI-DENCE DEGREE CALCULA-TION UNIT

PROPAGA-TION SIMILAR-ITY CALCULA-TION UNIT

INTEGER PARAL-LAX CALCULA-TION UNIT

DECIMAL FRACTION PARALLAX CALCULA-TION UNIT

SELEC-TION UNIT

SELECT-ED CALCU-LATION RESULT

1F2

SECOND IMAG-ING UNIT

CAP-TURED IMAGE

1F32

SECOND POLARI-ZATION IMAGE GENERA-TION UNIT

POLARI-ZATION IMAGE

1F42

SECOND HIGH-FREQUENCY EMPHASIS FILTER UNIT

C(p,d)

S(p,d)

S(p,d−1)

D'(p)

C(p,d+1)

S(p,d+1)

S(p,d)

C(p,d+2)

S(p,d+2)

S(p,d+1)

D'(p)

1F36

SECOND BRIGHT-NESS IMAGE GENERA-TION UNIT

BRIGHT-NESS IMAGE

S(p,d+2)

EP 2 913 797 A1

## FIG.18

EP 2 913 797 A1

# FIG.19

# FIG.20A

NUMBER
OF
PIXELS

PIXEL
VALUE

REGION HAVING
DEVIATION

# FIG.20B

NUMBER
OF
PIXELS

PIXEL
VALUE

EP 2 913 797 A1

# FIG.21

FIG.22

EP 2 913 797 A1

# FIG.23

FIG.24

DENSE PARALLAX CALCULATION UNIT

1F46 — DECIMAL FRACTION PARALLAX CALCULATION UNIT

1F45 — INTEGER PARALLAX CALCULATION UNIT

1F44 — PROPAGATION SIMILARITY CALCULATION UNIT

1F43 — COINCIDENCE DEGREE CALCULATION UNIT

1F41 — FIRST HIGH-FREQUENCY EMPHASIS FILTER UNIT

1F42 — SECOND HIGH-FREQUENCY EMPHASIS FILTER UNIT

1F4

$D'(p)$

$D(p)$, $S(p,d-2)$, $S(p,d-1)$, $S(p,d)$, $S(p,d+1)$, $S(p,d+2)$

$S(p,d-2)$, $S(p,d-1)$, $S(p,d)$, $S(p,d+1)$, $S(p,d+2)$

$C(p,d-2)$, $C(p,d-1)$, $C(p,d)$, $C(p,d+1)$, $C(p,d+2)$

IMAGE PROCESSING UNIT — 1F3

1F31 — FIRST POLARIZATION IMAGE GENERATION UNIT

1F37 — FIRST HISTOGRAM PROCESSING UNIT

1F33 — FIRST POLARIZATION RATIO IMAGE GENERATION UNIT

1F39 — THIRD HISTOGRAM PROCESSING UNIT

1F32 — SECOND POLARIZATION IMAGE GENERATION UNIT

1F38 — SECOND HISTOGRAM PROCESSING UNIT

1F34 — SECOND POLARIZATION RATIO IMAGE GENERATION UNIT

1F40 — FOURTH HISTOGRAM PROCESSING UNIT

POLARIZATION IMAGE

POLARIZATION RATIO IMAGE

1F1 — FIRST IMAGING UNIT

1F2 — SECOND IMAGING UNIT

CAPTURED IMAGE

1

37

## FIG.25

FIRST IMAGING UNIT (1F1) → CAPTURED IMAGE → FIRST POLARIZATION IMAGE GENERATION UNIT (1F31)

FIRST POLARIZATION IMAGE GENERATION UNIT (1F31) → FIRST HISTOGRAM PROCESSING UNIT (1F37) → POLARIZATION IMAGE

FIRST BRIGHTNESS IMAGE GENERATION UNIT (1F35) → BRIGHTNESS IMAGE

SECOND IMAGING UNIT (1F2) → CAPTURED IMAGE → SECOND POLARIZATION IMAGE GENERATION UNIT (1F32)

SECOND POLARIZATION IMAGE GENERATION UNIT (1F32) → SECOND HISTOGRAM PROCESSING UNIT (1F38) → POLARIZATION IMAGE

SECOND BRIGHTNESS IMAGE GENERATION UNIT (1F36) → BRIGHTNESS IMAGE

IMAGE PROCESSING UNIT (1F3)

DENSE PARALLAX CALCULATION UNIT (1F4)

FIRST HIGH-FREQUENCY EMPHASIS FILTER UNIT (1F41)

SECOND HIGH-FREQUENCY EMPHASIS FILTER UNIT (1F42)

COINCIDENCE DEGREE CALCULATION UNIT (1F43): $C(p,d-2)$, $C(p,d-1)$, $C(p,d)$, $C(p,d+1)$, $C(p,d+2)$

PROPAGATION SIMILARITY CALCULATION UNIT (1F44): $S(p,d-2)$, $S(p,d-1)$, $S(p,d)$, $S(p,d+1)$, $S(p,d+2)$

INTEGER PARALLAX CALCULATION UNIT (1F45): $D(p)$, $S(p,d-2)$, $S(p,d-1)$, $S(p,d)$, $S(p,d+1)$, $S(p,d+2)$

DECIMAL FRACTION PARALLAX CALCULATION UNIT (1F46): $D'(p)$

SELECTION UNIT (1F5) → SELECTED CALCULATION RESULT

## FIG.26

# FIG.27

IMAGE PROCESSING UNIT — 1F3

DENSE PARALLAX CALCULATION UNIT — 1F4

1F1
FIRST IMAGING UNIT

CAP-TURED IMAGE

1F31
FIRST POLARI-ZATION IMAGE GENERA-TION UNIT

1F37
FIRST HISTO-GRAM PROC-ESSING UNIT

POLARI-ZATION IMAGE

1F33
FIRST POLARI-ZATION RATIO IMAGE GENERA-TION UNIT

1F39
THIRD HISTO-GRAM PROC-ESSING UNIT

POLARI-ZATION RATIO IMAGE

1F2
SECOND IMAGING UNIT

CAP-TURED IMAGE

1F32
SECOND POLARI-ZATION IMAGE GENERA-TION UNIT

1F38
SECOND HISTO-GRAM PROC-ESSING UNIT

POLARI-ZATION IMAGE

1F34
SECOND POLARI-ZATION RATIO IMAGE GENERA-TION UNIT

1F40
FOURTH HISTO-GRAM PROC-ESSING UNIT

POLARI-ZATION RATIO IMAGE

1F41
FIRST HIGH-FREQUENCY EMPHASIS FILTER UNIT

1F42
SECOND HIGH-FREQUENCY EMPHASIS FILTER UNIT

1F43
COINCI-DENCE DEGREE CALCULA-TION UNIT

$C(p,d-2)$
$C(p,d-1)$
$C(p,d)$
$C(p,d+1)$
$C(p,d+2)$

1F44
PROPAGA-TION SIMILAR-ITY CALCULA-TION UNIT

$S(p,d-2)$
$S(p,d-1)$
$S(p,d)$
$S(p,d+1)$
$S(p,d+2)$

1F45
INTEGER PARAL-LAX CALCULA-TION UNIT

$D(p)$
$S(p,d-2)$
$S(p,d-1)$
$S(p,d)$
$S(p,d+1)$
$S(p,d+2)$

1F46
DECIMAL FRAC-TION PARAL-LAX CALCULA-TION UNIT

$D'(p)$
$D'(p)$

1F5
SELEC-TION UNIT

SELECT-ED CALCU-LATION RESULT

1

EP 2 913 797 A1

Europäisches
Patentamt

European
Patent Office

Office européen
des brevets

# EUROPEAN SEARCH REPORT

Application Number

EP 15 15 5685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2013/010106 A1 (YOKOTA SOICHIRO [JP]) 10 January 2013 (2013-01-10) * paragraphs [0002], [0037] - [0039], [0045], [0058], [0059], [0063]; figure 9C * ----- | 1-11 | INV. G06T7/00 |

TECHNICAL FIELDS
SEARCHED    (IPC)

G06T
H04N

The present search report has been drawn up for all claims

| Place of search | Date of completion of the search | Examiner |
|---|---|---|
| Munich | 10 July 2015 | Krawczyk, Grzegorz |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

**ANNEX TO THE EUROPEAN SEARCH REPORT
ON EUROPEAN PATENT APPLICATION NO.**

EP 15 15 5685

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2015

| Patent document cited in search report | Publication date | Patent family member(s) | Publication date |
|---|---|---|---|
| US 2013010106 A1 | 10-01-2013 | CN 102575931 A | 11-07-2012 |
| | | EP 2491340 A1 | 29-08-2012 |
| | | JP 5440927 B2 | 12-03-2014 |
| | | JP 2011085539 A | 28-04-2011 |
| | | KR 20120066043 A | 21-06-2012 |
| | | TW 201132937 A | 01-10-2011 |
| | | US 2013010106 A1 | 10-01-2013 |
| | | WO 2011049149 A1 | 28-04-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5278819 B
- JP 2010256138 A
- JP 2011085539 A
- JP 2011215545 A
- JP 2012181142 A
- JP 2013038502 A
- JP 2013038503 A
- JP 2013126114 A
- JP 2013167624 A
- JP 2014037502 A
- JP 2015004787 A

**Non-patent literature cited in the description**

- **H. HIRSCHMULLER.** Accurate and efficient stereo processing by semi-global matching and mutual information. *IEEE Computer Society Conference on Computer Vision and Pattern Recognition,* 2006, vol. 2, 807-814